# EUROPÄISCHE PATENTSCHRIFT

(11) **EP 3 133 097 B1**
(45) Veröffentlichungstag und Bekanntmachung des Hinweises auf die Patenterteilung: **05.10.2022**
(21) Anmeldenummer: 15181218.7
(22) Anmeldetag: 17.08.2015
(51) Int. Cl.: C08G 18/48, C08G 18/76, C08G 18/18, C08G 18/24

(54) **HERSTELLUNG VON POLYURETHANWEICHSCHÄUMEN MIT VERBESSERTER HÄRTE**
POLYURETHANE FLEXIBLE FOAMS WITH INCREASED HARDNESS
MOUSSES SOUPLES DE POLYURÉTHANE A DURETE ELEVEE

(43) Veröffentlichungstag der Anmeldung: 22.02.2017
(73) Patentinhaber: Evonik Operations GmbH, 45128 Essen (DE)
(72) Erfinder: KREBS, Michael, 40219 Düsseldorf (DE); SASSENHAGEN, Jens, 45289 Essen (DE); HUBEL, Roland, 45136 Essen (DE); FUNK, Maike, 46282 Dorsten (DE)
(74) Vertreter: Evonik Patent Association

(56) Entgegenhaltungen:
- EP-A1- 0 263 280
- US-A1- 2007 299 153
- US-A1- 2013 225 706

## Beschreibung

Die vorliegende Erfindung liegt auf dem Gebiet der Polyurethane. Sie betrifft insbesondere flexible Polyurethansysteme und ein Verfahren zur Herstellung solcher Polyurethansysteme unter Einsatz bestimmter Vernetzer zur Härtesteigerung.

Polyurethane unterschiedlicher Art werden üblicherweise durch die Polymerisation von Diisocyanaten, wie z. B. 4,4'-Methylenbis(phenylisocyanat), kurz MDI, oder 2,4-Toluylendiisocyanat, kurz TDI, mit Polyether-Polyolen oder Polyester-Polyolen hergestellt. Polyether-Polyole können z.B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethanschäumen, einem der besonders wichtigen Polyurethansysteme, kommen üblicherweise zusätzliche Treibmittel zum Einsatz, wie z.B. Pentan, Methylenchlorid, Aceton oder Kohlenstoffdioxid. Als chemisches Treibmittel wird meist Wasser eingesetzt, welches unter Abspaltung von Kohlendioxid mit Isocyanat zu einem Polyharnstoff reagiert. Üblicherweise werden zur Stabilisierung des Polyurethanschaums oberflächenaktive Substanzen, insbesondere Silikontenside eingesetzt.

Polyurethanschaumstoffe bzw. -schäume finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Kalt- und Weichschäume für Sitzsysteme und Matratzen verwendet.

Andere relevante Polyurethansysteme sind z. B. Polyurethanbeschichtungen, Polyurethanadhäsive, Polyurethandichtmittel oder Polyurethanelastomere.

In vielen Teilen der Welt verlangt der Markt nach Möglichkeiten zur Härtesteigerung von Polyurethanweichschäumen. So gilt z.B. in Afrika und Südostasien eine Matratze oder ein Sitzmöbel als umso komfortabler je härter dieses ist. Jedoch ist eine Härtesteigerung generell nicht ohne weiteres möglich, zumindest nicht ohne eine meist unerwünschte Veränderung anderer physikalischer Eigenschaften der Matratze oder des Sitzmöbels in Kauf zu nehmen.

Zur Steigerung der Härte in Polyurethan-Weichschaumstoffen sind im Stand der Technik verschiedene Möglichkeiten bekannt. Die Härte kann im Sinne der vorliegenden Erfindung entweder als sogenannte Stauchhärte nach DIN EN ISO 3386-1:1997 + A1:2010 oder als Eindruckhärte nach DIN EN ISO 2439:2008 bestimmt werden. Zur Ermittlung der Stauchhärte wird ein quadratischer Prüfkörper zwischen zwei Platten zusammengedrückt und die Kraft gemessen, die notwendig ist, diesen Prüfkörper auf einen bestimmten Betrag seiner ursprünglichen Höhe (z.B. 25%, 40% oder 65%) zusammenzudrücken. Dieser Wert wird anschließend auf die geprüfte Fläche bezogen und es ergibt sich die Stauchhärte oder der Kompressionswiderstand des Schaumstoffs in kPa. Im Gegensatz zur Stauchhärte, bei der die Druckplatten größer als der Prüfkörper sind, wird die Eindruckhärte oder der Stauchwiderstand mit kleineren Druckplatten, die zur Vermeidung einer zu großen Scherung abgerundet sind, ermittelt. In diesem Fall wird der Schaum um 25%, 40% und 65 % der Ausgangsdicke gestaucht und anschließend wird die Eindruckhärte oder der Stauchwiderstand in N angegeben.

Allgemein ist zu beobachten, dass Polyurethanweichschäume erhöhter Dichte auch eine erhöhte Stauchhärte aufweisen. Nachteilig hieran ist jedoch, dass zur Produktion von Schaumstoffen eines gesteigerten Raumgewichts eine größere Menge an Rohstoffen benötigt wird, was die Herstellung der Schäume weniger wirtschaftlich macht. Der Einsatz von Polymerpolyol wie beispielsweise SAN-, PHD- oder PIPA-Polyolen führt ebenfalls zu einer deutlichen Härtesteigerung der Schaumstoffe. Dabei wird das zur Produktion des Weichschaums benötigte Polyetherpolyol teilweise durch Polymerpolyol ersetzt. Eine geringere Einsatzmenge des Polymerpolyols führt hierbei auch nur zu einer geringeren Härtesteigerung. Ein Einsatz von unter 10 Gew.-% führt so zu einer vernachlässigbaren Härtesteigerung, sodass je nach Polymeranteil im Polymerpolyol und gewünschtem Härtegrad des Polyurethanschaums für gewöhnlich zwischen 10 und 100 Gew.-% des für die Produktion des Schaums benötigten Polyetherpolyols durch Polymerpolyol ersetzt werden. Da der Preis des benötigten Polymerpolyols für gewöhnlich den Preis des standardmäßig verwendeten Polyetherpolyols sehr deutlich übertrifft, hat dieses Verfahren den Nachteil, dass es sehr teuer ist.

Polyurethanweichschäume mit verbesserter Härte können so nur mit erheblichem finanziellem Mehraufwand dargestellt werden. Außerdem weisen Polyurethanschäume, dargestellt mit Styrol/Acrylnitril (SAN) Copolymerpolyol, in der Regel ein schlechtes Emissionsverhalten auf, beispielsweise ermittelt entsprechend dem Prüfkammerverfahren in Anlehnung an die DIN-Norm DIN EN ISO 16000-9:2008-04, 24 Stunden nach Prüfkammerbeladung. Weitere Nachteile der oben beschriebenen Methode sind außerdem die durch den Polymeranteil im Polyol induzierte Dichtesteigerung des Polyurethanschaums und die schlechte Verfügbarkeit von Polymerpolyol in bestimmten Regionen der Welt.

Eine Möglichkeit zur Härtesteigerung eines Polyurethanweichschaums bei konstantem Raumgewicht besteht darin, den Grad der Vernetzung im Schaumnetzwerk zu erhöhen. Dies kann wiederum durch verschiedene Maßnahmen erreicht werden. Zunächst ist es möglich den Isocyanat-Index zu erhöhen. Der Isocyanat-Index ist eine auf dem Gebiet der Polyurethane fest etablierte Kennzahl und beschreibt das Verhältnis von tatsächlich eingesetztem Isocyanat zu (für eine stöchiometrische Umsetzung mit Polyol, Wasser und anderen gegenüber Isocyanaten reaktiven Verbindungen) berechnetem Isocyanat, multipliziert mit 100. Ein Index von 100 steht für ein molares Verhältnis der reaktiven Gruppen von 1 zu 1. Die Kennzahl für die Produktion von Weichblockschaum liegt normalerweise zwischen 95 und 115, handelt es sich um viskoelastische Schäume auch darunter. Eine Erhöhung des Indexes kann aber neben der gewünschten Härtesteigerung mehrere schwerwiegende Nachteile haben. So führt eine Erhöhung des Vernetzungsgrads im Allgemeinen zu einer geringeren Luftdurchlässigkeit oder erhöhten Geschlossenzelligkeit der Schaumstoffe. Außerdem hat eine erhöhte Isocyanatmenge den Nachteil, dass die Exothermie des Verschäumungsprozesses erhöht und so eine höhere Kerntemperatur im Schaum erreicht wird. Dies kann zu Kernverfärbungen (sog. "Scorch") oder im Extremfall zu spontaner Selbstentzündung des Schaumblocks führen. Eine größere Menge an Isocyanat bedeutet auch immer einen finanziellen Mehraufwand für den Verschäumer. Eine unerwünscht erhöhte Geschlossenzelligkeit wird auch erhalten, wenn zur besseren Vernetzung und somit zur Härtesteigerung die Menge an Zinnkatalysator erhöht wird. Eine weitere Möglichkeit die Vernetzung zu erhöhen und somit die Härte des Weichschaums zu steigern liegt im Einsatz von Vernetzungsmitteln (sog. "Crosslinker"). Crosslinker sind Additive, welche meist hochfunktionelle isocyanatreaktive Verbindungen darstellen. Erfahrungsgemäß führt jedoch ein Einsatz von Vernetzern immer auch zu erhöhter Geschlossenzelligkeit, was unerwünscht ist. Dies wird in vielen Fällen durch den (zumindest anteiligen) Einsatz von TDI-65 (wie z.B. in DE 3630225 beschrieben) oder durch den zusätzlichen Einsatz von Zellöffneradditiven (wie z.B. in EP 0 637 605 oder WO 2014/120191 beschrieben) ausgeglichen. TDI-65 ist ein Gemisch aus 65% 2,4-Toluoldiisocyanat und 35% 2,6-Toluoldiisocyanat. Es wird als weniger reaktives IsocyanatGemisch (im Vergleich zum gewöhnlichen TDI-80, welches aus 80% 2,4-Toluoldiisocyanat und 20% 2,6-Toluoldiisocyanat besteht) zum Öffnen der Zellen in geschlossenen Polyurethanweichschaumformulierungen verwendet. In beiden Fällen, sowohl beim Einsatz von TDI-65 als auch beim Einsatz von Zellöffneradditiven, müssen vom Verschäumer zusätzliche Rohstofflinien verwendet bzw. installiert werden, da sich beide Komponenten nicht ohne weiteres in Rohstoffbehältnissen der gewöhnlichen Edukte verarbeiten lassen. Dies führt wiederum zu einem erheblichen finanziellen Mehraufwand für die schaumproduzierende Industrie.

Eine hohe Geschlossenzelligkeit ist bei Matratzen und Polstermöbeln aus mehreren Gründen nicht wünschenswert. Durch einen hohen Anteil an geschlossenen Zellen verliert eine Matratze einen Großteil der Atmungsaktivität, d. h. Wasser kann von der Matratze nicht aufgenommen und somit auch nicht abtransportiert werden. In der Nacht gibt der menschliche Körper Feuchtigkeit in Form von Schweiß und/oder Schweißdampf an dessen Umgebung ab (zumindest ca. 0,7 L Wasser pro Nacht je nach klimatischer Umgebung). Um ein Schwitzen zu verhindern, ist es deshalb sehr wichtig, dass die Materialien der Matratze die Flüssigkeit und/oder Verdunstungen diffundieren lassen bzw. ableiten können und damit vom Körper wegführen. Auf diese Weise entsteht ein trockenes und angenehmes Bettklima. Sind die Materialien dagegen nicht atmungsaktiv, ist das Material nicht feuchtigkeitsableitend und/oder dampfdurchlässig, so sinkt der Schlafkomfort in inakzeptabler Weise. Ein weiterer schwerwiegender Nachteil von zu hoher Geschlossenzelligkeit ist eine geringere zu erwartende Lebensdauer des Sitzmöbels oder der Matratze. Durch das häufige Benutzen, werden die Zellen des Polyurethanweichschaums unter der Einwirkung des menschlichen Gewichts aufgebrochen (sog. "crushen"). Dadurch verliert der Schaum an Härte und die Verformung nach Druckeinwirkung (das sog. Compression Set) nimmt zu. Das führt zu unerwünschten Kuhlen. Kuhlen sind Vertiefungen, die sich allenfalls erst nach einiger Zeit oder aber überhaupt nicht mehr in den Ausgangszustand zurückformen, da die erforderliche Rückstellkraft abhandengekommen ist.

Außerdem weisen Schaumstoffe mit erhöhter Geschlossenzelligkeit eine verringerte Elastizität auf, was sich wiederum negativ auf den Komfort eines Sitzmöbels auswirken kann.

EP0263280A1 beschreibt ein Verfahren zur Herstellung von elastischen, offenzelligen Polyurethan-Weichschaumstoffen mit erhöhter Stauchhärte, wobei als Polyolgemisch ein Gemisch, bestehend aus 95 bis 75 Gew.-% eines endständig OH-Gruppen aufweisenden Polyetherpolyols der Funktionalität 2 - 4 und einer OH-Zahl von 25 - 60, und 5 bis 25 Gew.-% eines mindestens hexa-funktionellen Polyetherpolyols mit einer OH-Zahl von 150 - 200, das nach Umsetzung eines Alkohols einer Funktionalität von mindestens 6 mit Propylenoxid endständig mit 5 - 50 Gew.-% Ethylenoxid , modifiziert worden ist, verwendet wird.

WO2008002435A1 beschreibt ein Verfahren zur Herstellung von viskoelastischem Schaum mit geringer Elastizität unter Einsatz einer Isocyanat-reaktiven Komponente, die 5 bis 100 Gew.-%, mindestens eines Polyetherpolyols umfasst, das 2 bis 4 reaktive Hydroxylgruppen pro Molekül enthält, mit einem Äquivalentgewicht von 280 bis 2000, wobei das Polyetherpolyol das Alkoxylierungsprodukt einer oder mehrerer organischer Verbindungen ist, enthaltend mindestens zwei aromatische Ringe pro Verbindung , durchschnittlich 2 bis 4 aktive Zerewitinoff-Wasserstoffatome und ein durchschnittliches Äquivalentgewicht von 100 bis 575 aufweist.

US20130225706A1 beschreibt ein Reaktionssystem zur Herstellung eines viskoelastischen Polyurethanschaums, umfassend eine isocyanatreaktive Komponente, welche beinhaltet
(i) zu 10 bis 50 Gew.-% ein oder mehrere propylenoxidreiche Polyole mit niedrigem Äquivalentgewicht, die ein kombiniertes Äquivalentgewicht im Zahlenmittel von 200 bis 500 aufweisen;
(ii) zu 45 bis 80 Gew.-% eine oder mehrere ethylenoxidreiche Polyole, die ein kombiniertes Äquivalentgewicht im Zahlenmittel von 200 bis 800 und einen Ethylenoxidgehalt von 30 Gew.-% bis 75 Gew.-% aufweisen,
   und mindestens eines von Folgendem:
(iii) zu 10 bis 30 Gew.-% eine oder mehrere propylenoxidreichen Polyole mit hohem Äquivalentgewicht, die ein Äquivalentgewicht im Zahlenmittel von 800 bis 2000 aufweisen; und
(iv) zu 10 bis 40 Gew.-% eine oder mehrere Styrol-Acrylnitril enthaltende Propylenoxid-Copolymerpolyole.

Die konkrete zu lösende Aufgabe der vorliegenden Erfindung war es vor diesem Hintergrund, Additive bereitzustellen, die einen einfachen Zugang zu Polyurethansystemen, vorzugsweise Polyurethanschäumen, insbesondere frei gestiegenen Polyurethan-Weichblockschäumen oder Formschäumen mit verbesserter Härte bei hinreichender Offenzelligkeit ermöglichen. Unter hinreichender Offenzelligkeit wird insbesondere verstanden, dass die Gasdurchlässigkeit des erfindungsgemäßen Polyurethanschaums vorzugsweise von 1 bis 300 mm Wassersäule, bevorzugt 3 bis 250 mm Wassersäule in Anlehnung an DIN EN ISO 4638:1993-07 beträgt.

Überraschenderweise wurde nun gefunden, dass diese Aufgabe durch den Gegenstand dieser Erfindung gelöst werden kann, nämlich einem Additiv, geeignet zur Steigerung der Härte von Polyurethanweichschäumen, welches mindestens eine Verbindung (V) enthält,
(i) die mindestens drei gegenüber Isocyanaten reaktive Wasserstoffatome enthält,
(ii) eine durchschnittliche Hydroxylzahl, bestimmt nach DIN 53240-1:2013-06, von 80-280 mg KOH/g, bevorzugt von 100 - 250 mg KOH/g, aufweist und
(iii) > 50 Gew.-%, z.B. ≥ 51 Gew.-%, im Molekül gebundenes Ethylenoxid enthält, Gew.-% bezogen auf den Gesamtalkylenoxidgehalt der Verbindung,
wobei die erfindungsgemäße Verbindung (V) mindestens 50% primäre OH-Gruppen aufweist und ausgewählt ist aus Verbindungen der 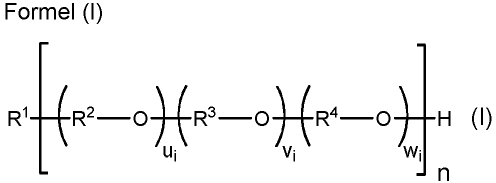 worin
- R¹: = Startersubstanzrest ohne für die Alkoxylierung aktiven H-Atome, wie vorzugsweise Molekülreste von mehrwertigen Alkoholen, mehrwertigen Aminen, mehrwertigen Thiolen, Carbonsäuren, Aminoalkoholen, Aminocarbonsäuren, Thioalkoholen, Hydroxyestern, Polyetherpolyolen, Polyesterpolyolen, Polyesteretherpolyolen, Polycarbonatpolyolen, Polyethyleniminen, Polyetheraminen, Polyetherthiolen, Polyacrylatpolyolen, Ricinusöl, von Mono-, Di oder Triglyceriden der Ricinolsäure, chemisch modifizierten Mono-, Di- und/oder Triglyceriden von Fettsäuren und/oder C1-C24 Alkyl-Fettsäureestern, die im Mittel mindestens 3 OH-Gruppen pro Molekül enthalten,
- R²: CH₂-CH(CH₃),
- R³: CH₂-CH₂,
- R⁴: CH₂-CH(R⁵), CH(R⁶)-CH(R⁶), CH₂-C(R⁶)₂, C(R⁶)₂-C(R⁶)₂, 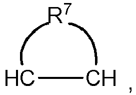 CH₂-CH-CH₂-R⁸, C₆H₆-CH-CH₂, C₆H₆-C(CH₃)-CH₂, Molekülrest von ein- oder mehrfach epoxidierten Fetten oder Ölen als Mono-, Di-, und Triglyceride oder Molekülrest von ein- oder mehrfach epoxidierten Fettsäuren oder deren C₁-C₂₄-Alkylestern,
- R⁵: C₂ bis C₂₄-Alkylrest, Alkenrest, der linear oder verzweigt sein kann,
- R⁶: C₂ bis C₂₄-Alkylrest, Alkenrest, der linear oder verzweigt sein kann,
- R⁷: C₃ bis C₆ Alkylrest, der linear angeordnet ist,
- R⁸: OH, Cl, OCH₃, OCH₂-CH₃, O-CH₂-CH=CH₂, O-CH=CH₂
und wobei gilt
uᵢ ≥ 1,
vᵢ ≥ 1,
wᵢ ganze Zahlen von 0 - 400; insbesondere wᵢ = 0

- n: ganze Zahl von 3 bis 25, bevorzugt von 3 bis 10, insbesondere 3 bis 8.
- i: ganze Zahl mit i = 1 bis n,

wobei die Reihenfolge der Monomerbausteine in den einzelnen Polymerketten 1 bis n beliebig ist, und wobei die n-Polymerketten voneinander unabhängig zusammengesetzt sein können,
wobei das im Molekül gebundene Ethylenoxid zumindest zu 90% endständig ist, % bezogen auf das gesamte im Molekül gebundene Ethylenoxid,
und wobei die enthaltenen Verbindungen (V) 55 bis 99 Gew.-%, Ethylenoxid und 1 bis 45 Gew.-% Propylenoxid, enthalten, Gew.-% bezogen auf den Gesamtalkylenoxidgehalt der Verbindung (V) gemäß Formel (I).

Der Begriff "Additiv" umfasst im Sinne dieser Erfindung eine Additivzusammensetzung, die zumindest eine Verbindung (V), wie zuvor beschrieben, enthalten kann. Dabei kann das gesamte Additiv genau eine solcher Verbindungen umfassen, das gesamte Additiv kann genau aus einer solcher Verbindungen bestehen, das gesamte Additiv kann mehrere, unterschiedliche solcher Verbindungen (V) umfassen, das gesamte Additiv kann aus mehreren, unterschiedlichen solcher Verbindungen (V) bestehen. Außerdem kann das Additiv noch weitere Komponenten umfassen, wie insbesondere ein oder mehrere anorganische oder organische Lösungsmittel, vorzugsweise ausgewählt aus Wasser, Alkoholen, insbesondere Polyethermonoolen oder -polyolen, vorzugsweise bestehend aus H-funktionellen Startersubstanzen, an welche mittels Alkoxylierung Alkylenoxide (Epoxide) mit 2-24 Kohlenstoffatomen, vorzugsweise Ethylenoxid und/oder Propylenoxid, angelagert wurden und die ein Molekulargewicht von vorzugsweise 200 - 8000 g/mol, bevorzugt von 300 - 5000 g/mol, besonders bevorzugt von 500 - 1000 g/mol, und einen PO-Gehalt von vorzugsweise 10 -100 Gew.%, bevorzugt von 50 -100 Gew.% aufweisen sowie Polyestermonolen oder-polyolen mit einem Molekulargewicht vorzugsweise im Bereich von 200 bis 4500 g/mol, Glykolen, Alkoxylaten, Carbonaten, Ether, Ester, verzweigten oder linearen aliphatischen oder aromatischen Kohlenwasserstoffen und/oder Ölen synthetischer und/oder natürlicher Herkunft.

Der erfindungsgemäße Gegenstand ermöglicht die überraschend einfache Bereitstellung von Polyurethanschaum mit verbesserter, vorzugsweise besonders hoher Härte und hinreichender Offenzelligkeit. Die Verbesserung der Härte bezieht sich auf den Vergleich mit Polyurethanschäumen, die ohne erfindungsgemäßes Additiv, aber ansonsten auf analoge Weise hergestellt wurden. Die Bereitstellung besonders hochwertiger Schäume mit guter, stabiler und homogener Schaumstruktur wird ermöglicht. Die resultierenden Schäume zeigen als weiteren Vorteil günstige, also brand- bzw. flammhindernde, Brandeigenschaften im Brandfall und weisen verbesserte Alterungseigenschaften auf. Zur Untersuchung der Alterungseigenschaften wurde ein Verfahren in Anlehnung an ISO 3385-1975 entwickelt und durchgeführt. Hierzu wurde ein Schaummuster 80000 mal bis auf 70% seiner Ursprungshöhe zusammengedrückt und der Verlust an Dicke und Härte ermittelt (detaillierte Beschreibung im Beispielteil). Ebenfalls vorteilhaft ist, dass bei der Bereitstellung des Polyurethanschaums auf die gewohnten Produktionsanlagen zurückgegriffen werden kann. Noch weitere Vorteile der Erfindung liegen darin, dass die erfindungsgemäßen Additive leicht handzuhaben sind, insbesondere eine geringe Viskosität aufweisen und vorteilhafterweise hydrolysestabil, emissionsarm und nahezu geruchsneutral sind. Sie verfügen über ein breites Verarbeitungsspiel und sind nach Standardverfahren reproduzierbar herstellbar. Der erfindungsgemäße Einsatz des Additivs führt zu keinen nachteiligen Effekten bei den physikalischen Eigenschaften des Schaumstoffs. Insbesondere werden Zugfestigkeit, Druckverformung, Ausdehnung des Schaumstoffs nicht beeinträchtigt.

Dies betrifft insbesondere die Bereitstellung von Polyurethan-Weichblockschäumen, aber auch bei PU-Formschäumen (sog. molded PU-Schäume) werden sehr gute Ergebnisse im Sinne der Erfindung erzielt.

Der erfindungsgemäß erhältliche Schaum zeichnet sich vorteilhafterweise durch eine anwendungsadäquate Gasdurchlässigkeit (A), Dichte (B), Porenstruktur (C), Druckspannung oder Stauchhärte (D) sowie Zellstruktur (E) aus.

Im Sinne dieser Erfindung bevorzugte Polyurethanweichschaumstoffe, erhältlich durch Einsatz des erfindungsgemäßen Additivs, weisen vorzugsweise eine Gasdurchlässigkeit (A) von 1 bis 300 mm Wassersäule, bevorzugt 3 bis 250 mm Wassersäule in Anlehnung an DIN ISO 4638:1993-07 aufweisen, gemessen durch Messung der Druckdifferenz bei der Durchströmung einer Schaumprobe. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluss wird auf der Schaumprobe platziert. Über die zentrale Bohrung wird ein konstanter Luftstrom von 8 I/min in die Schaumprobe geleitet. Die auftretende Druckdifferenz (relativ zu ungehindertem Ausströmen) wird mittels einer Wassersäule in einem graduierten Druckmesser ermittelt. Je geschlossener der Schaum ist, desto mehr Druck wird aufgebaut und desto mehr wird der Spiegel der Wassersäule nach unten gedrückt und desto größere Werte werden gemessen.

Die Dichte (B) erfindungsgemäß bevorzugter Polyurethanweichschaumstoffe, erhältlich durch Einsatz des erfindungsgemäßen Additivs, liegt vorzugsweise bei 5 bis 150 kg/m³, bevorzugt bei 10 bis 130 kg/m³ und besonders bevorzugt bei 15 bis 100 kg/m³, gemessen nach DIN EN ISO 845:2009-10.

Die Porenstruktur (C) (d.h. im Sinne dieser Erfindung die mittlere Zahl der Zellen pro 1 cm) erfindungsgemäß bevorzugter Polyurethanweichschaumstoffe erhältlich durch Einsatz des erfindungsgemäßen Additivs, beträgt vorzugsweise von 5 bis 25 Zellen/cm und wird auf einer Schnittfläche optisch bestimmt, gemessen gemäß DIN EN 15702.

Erfindungsgemäß bevorzugte Polyurethanweichschaumstoffe, erhältlich durch Einsatz des erfindungsgemäßen Additivs, weisen bei einer 40 %-igen Kompression vorteilhafterweise eine Druckspannung oder Stauchhärte (D) von 0,1 kPa bis 15 kPa, bevorzugt 0,5 bis 13 kPa, insbesondere von 2 bis 11 kPa bestimmt gemäß DIN EN ISO 3386-1:1997 + A1:2010 auf.

Die Zellstruktur (E) der erfindungsgemäß bevorzugten Polyurethanweichschaumstoffe, erhältlich durch Einsatz des erfindungsgemäßen Additivs, ist vorzugsweise zu mehr als 80 % offenzellig (gemessen gemäß DIN ISO 4590).

Im Sinne dieser Erfindung besonders bevorzugte Polyurethanweichschaumstoffe, erhältlich durch Einsatz des erfindungsgemäßen Additivs, weisen eine Gasdurchlässigkeit (A) von 1 bis 300 mm Wassersäule, bevorzugt 3 bis 250 mm Wassersäule, eine Dichte (B) von 5 bis 150 kg/m³, bevorzugt von 10 bis 130 kg/m³ und besonders bevorzugt von 15 bis 100 kg/m³, eine Porenstruktur (C) mit 5 bis 25 Zellen/cm, eine Druckspannung oder Stauchhärte (D) von 0,1 kPa bis 15 kPa, bevorzugt 0,5 bis 13 kPa, insbesondere 2 bis 11 kPa sowie eine zu mehr als 80 % offenzellige Zellstruktur (E) auf, (A) bis (E) gemessen wie jeweils zuvor angegeben.

Gemäß einer bevorzugten Ausführungsform der Erfindung weist die Verbindung (V) eine Funktionalität von 3-10, bevorzugt 3-8 auf. Im Falle des Einsatzes mehrerer Verbindungen (V) können von ganzen Zahlen abweichende Funktionalitäten auftreten, die sich dann auf die eingesetzte Mischung beziehen, wie zum Beispiel eine Funktionalität von 3,1-10, z.B. 3,5 oder 4,5.

Funktionalität bedeutet im Sinne dieser Erfindung das Vorhandensein einer gegenüber Isocyanaten reaktiven funktionellen Gruppe, beispielsweise einer Hydroxy- oder Amin-Gruppe. Eine Funktionalität von 3 beschreibt also eine Verbindung, die drei gegenüber Isocyanten reaktive Gruppen aufweist.

Gemäß einer bevorzugten Ausführungsform der Erfindung weist die Verbindung (V) überwiegend, d.h. mindestens 50%, besonders bevorzugt mindestens 70% primäre OH-Gruppen auf.

Das Verhältnis von primären zu sekundären und tertiären OH-Endgruppen kann mittels NMR-Methoden bestimmt werden. Hierzu können die ¹³C-NMR spektroskopischen Messungen zur Bestimmung des Verhältnisses von primären zu sekundären OH-Gruppen gemäß der Standard Test Methode D4273-05 von ASTM International durchgeführt werden. Die Zuordnung der einzelnen Signale ist dem Fachmann geläufig und kann über die Aufnahme eines ¹³C-APT-NMR Spektrums bestätigt werden oder kann gegebenenfalls durch Vergleich mit den Signalen geeigneter Beispielsubstanzen erfolgen. Vorzugsweise erfolgt die Bestimmung wie nachfolgend beschrieben mit einem NMR-Spektrometer mit Rechnereinheit und Autosampler mit 5 mm Probenkopf der Firma Bruker, Typ 400 MHz, 10 mm QNP unter Verwendung von 5 mm Probenröhrchen und Verschlusskappen aus Plastik für die Protonen-NMR-Messungen sowie 10 mm Probenröhrchen und Verschlusskappen aus Plastik für die 13C-Messungen, beides von der Firma Norell Inc. Die Probennahme erfolgt mittels Pasteur-Pipetten der Firma Brand. Als Reagenzien werden eingesetzt: Deuterochloroform (CDCl₃) der Firma Deutro, Deuterierungsgrad 99,8 %), Molsieb A3 der Firma Merck (zur Entfernung von Wasserresten aus dem Lösemittel). Die Messungen werden unter Verwendung der in Tabelle 1 angegebenen Messparameter durchgeführt:

**Tabelle 1: Messparameter für NMR-Messung**

| | ¹H NMR | ¹³C NMR |
|---|---|---|
| Probenmenge | Ca. 20 mg | Ca. 1 g |
| Volumen CDCl₃ | Ca. 1,25 mL | Ca. 5 mL |
| Senderfrequenz | 399,94 MHz | 100,624 MHz |
| Relaxationszeit | 0 sec. | 10 sec. |
| Transmitter Offset | 1350,0 Hz | 11000 Hz |
| Anzahl der Scans | 16 | 512 |
| Linienbreite | 0,3 Hz | 1 Hz |

Dazu wird die angegebene Probenmenge in ein sauberes NMR-Röhrchen eingefüllt und mit dem angegebenen Volumen an CDCl₃ versetzt. Das Probenröhrchen wird mit der Plastikkappe verschlossen und die Probe durch Schütteln homogenisiert. Nachdem sie entgast wurde, z.B. unter Nutzung eines Ultraschallbades für 1-5 Sekunden, wird die Probe im NMR-Spektrometer vermessen.

Gemäß einer besonders bevorzugten Ausführungsform der Erfindung ist das in der Verbindung (V) gebundene Ethylenoxid zumindest zu ≥ 90 %, insbesondere zu 100%, bevorzugt in Form von Blöcken endständig gebunden, % bezogen auf das gesamte im Molekül gebundene Ethylenoxid. Um einen endständigen Ethylenoxid-Endblock zu erhalten, wird, wie in Beispiel 1 beschrieben, nach Abreagieren des in einem vorgeschalteten Dosierblock verwendeten Alkylenoxids oder Alkylenoxidgemischs und anschließendem Entfernen der überschüssigen, nicht umgesetzten Restmonomere unter vermindertem Druck in einem nachgeschalteten Dosierblock ausschließlich Ethylenoxid zugesetzt.

"Endständig gebunden" bedeutet im Sinne dieser Erfindung, dass Polymerketten, welche durch Alkoxylierung aufgebaut werden, durch einen reinen Ethylenoxid-Endblock abgeschlossen werden und die Polymerketten somit primäre OH-Gruppen aufweisen.

Es entspricht einer weiteren bevorzugten Ausführungsform der Erfindung, wenn es sich bei dem erfindungsgemäßen Additiv, insbesondere der Verbindung (V), bei Raumtemperatur (T=20°C) und Atmosphärendruck um eine Flüssigkeit handelt.

Das erfindungsgemäße Verfahren, die erfindungsgemäßen Additive sowie deren Verwendung werden nachfolgend anhand von vorteilhaften Ausführungsformen genauer beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen in Anlehnung an DIN 55672-1:2007-8 durch Gelpermeationschromatographie (GPC) bestimmt, wobei die Kalibrierung gegen einen Polypropylenglycolstandard (76 - 6000 g/mol) erfolgte. Die Struktur der eingesetzten Verbindungen wurde durch NMR-Methoden, insbesondere durch ¹³C- und ¹H-NMR bestimmt. Die Hydroxylzahlen können titrimetrisch nach DIN 53240-1:2013-06 bestimmt werden. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Sind nachfolgend Messwerte angegeben, so sind diese Messungen, wenn nicht anders angegeben bei Normalbedingungen (25 °C und 1013 mbar) durchgeführt worden.

Die erfindungsgemäße Verbindung (V) ist ausgewählt aus Verbindungen der Formel (I). 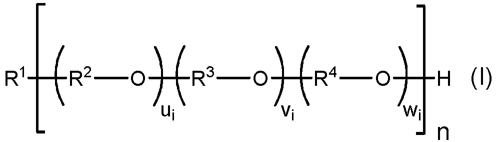 worin
- R¹: Startersubstanzrest ohne für die Alkoxylierung aktiven H-Atome, wie beispielsweise Molekülreste von mehrwertigen Alkoholen, mehrwertigen Aminen, mehrwertigen Thiolen, Carbonsäuren, Aminoalkoholen, Aminocarbonsäuren, Thioalkoholen, Hydroxyestern, Polyetherpolyolen, Polyesterpolyolen, Polyesteretherpolyolen, Polycarbonatpolyolen, Polyethyleniminen, Polyetheraminen (z. B. sogenannte Jeffamine^{®} von Huntsman, wie z. B. T-403, T-3000, T-5000 oder entsprechende Produkte der BASF, wie z . B . Polyetheramin T403, T5000), Polyetherthiolen, Polyacrylatpolyolen, Ricinusöl, von Mono -, Di- oder Triglyceriden der Ricinolsäure, chemisch modifizierten Mono-, Di- und/oder Triglyceriden von Fettsäuren und/oder C1-C24 Alkyl-Fettsäureestern, die im Mittel mindestens 3 OH-Gruppen pro Molekül enthalten.
- R²: CH₂-CH(CH₃)
- R³: CH₂-CH₂
- R⁴: CH₂-CH(R⁵), CH(R⁶)-CH(R⁶), CH₂-C(R⁶)₂, C(R⁶)₂-C(R⁶)₂, 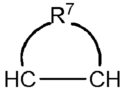 CH₂-CH-CH₂-R⁸, C₆H₆-CH-CH₂, C₆H₆-C(CH₃)-CH₂, Molekülrest von ein- oder mehrfach epoxidierten Fetten oder Ölen als Mono-, Di-, und Triglyceride oder Molekülrest von ein- oder mehrfach epoxidierten Fettsäuren oder deren C₁-C₂₄-Alkylestern
- R⁵: C₂ bis C₂₄-Alkylrest, Alkenrest, der linear oder verzweigt sein kann
- R⁶: C₂ bis C₂₄-Alkylrest, Alkenrest, der linear oder verzweigt sein kann
- R⁷: C₃ bis C₆ Alkylrest, der linear angeordnet ist
- R⁸: OH, Cl, OCH₃, OCH₂-CH₃, O-CH₂-CH=CH₂, O-CH=CH₂
und wobei gilt
uᵢ ≥ 1,
vᵢ ≥ 1,
wᵢ ganze Zahlen von 0 - 400; insbesondere wᵢ = 0.

- n: beschreibt die Funktionalität und kann ganze Zahlen von 3 bis 25, bevorzugt von 3 bis 10, insbesondere 3 bis 8 annehmen.
- i: weist ganze Zahlen von i = 1 bis n auf.

Die Reihenfolge der Monomerbausteine in den einzelnen Polymerketten 1 bis n ist - abgesehen von einem bevorzugten Ethylenoxid-Endblock- beliebig. Zusätzlich gilt, dass die n-Polymerketten des Additivs voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können unterschiedliche Strukturen von Additiven der allgemeinen Formel (I) nebeneinander vorliegen.

Gilt in der Formel (I) uᵢ, vᵢ, wᵢ, ≠ 0, oder uᵢ, vᵢ ≠ 0 und gleichzeitig wᵢ = 0, so können die einzelnen Bausteine (R²-O), (R³-O) und (R⁴-O) oder (R²-O) und (R³-O) - abgesehen von einem bevorzugten Ethylenoxid-Endblock - entweder in Form von Blöcken, streng alternierend oder in Form von Gradienten aneinander gebunden sein.

Die chemische Umgebung einzelner Alkylenoxidmoleküle, d.h. das Vorhandensein von Alkylenoxid-Blöcken oder eine strenge Alternation verwendeter Alkylenoxide kann ebenfalls mittels NMR-Methoden bestimmt werden. Das genaue Vorgehen ist dem Fachmann geläufig.

Verbindungen der Formel (I) können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das bevorzugt 3 oder mehr reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse.

Allgemein können zur Herstellung der erfindungsgemäßen Additive z.B. Alkylenoxide (Epoxide) mit vorzugsweise 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid. 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyldimethoxysilan, 3-Glycidyloxypropylethyldiethoxysilan, 3-Glycidyloxypropyltriisopropoxysilan. Insbesondere werden als Alkylenoxide Ethylenoxid und Propylenoxid eingesetzt werden.

Als geeignete H-funktionelle Startersubstanz können insbesondere Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus mehrwertige Alkohole, mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyetherpolycarbonatpolyole, Polyethylenimine, Polyetheramine (z. B. sogenannte Jeffamine^{®} von Huntsman, wie z. B. T-403, T-3000, T-5000 oder entsprechende Produkte der BASF, wie z. B. Polyetheramin T403, T5000), Polyetherthiole, Polyacrylatpolyole, Ricinusöl, Mono-, Di oder Triglyceride von Ricinolsäure, chemisch modifizierte Mono-, Di- und/oder Triglyceride von Fettsäuren, und C₁-C₂₄ Alkyl-Fettsäureester, die im Mittel mindestens 3 OH-Gruppen pro Molekül enthalten, eingesetzt.

Als H-funktionelle Startersubstanzen geeignete mehrwertige Alkohole sind beispielweise dreiwertige Alkohole (wie beispielweise Trimethylolpropan, Glycerin, Trishydroxyethylisocyanurat, Rizinusöl); vierwertige Alkohole (wie beispielsweise Pentaerythrit oder Diglycerin); Polyalkohole (wie beispielweise Sorbit, andere Hexite oder Pentite, Saccharose oder andere Mono-, Oligo- oder Polysaccharide wie z.B. Stärke, Stärkehydrolysate, Cellulose oder Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Arcol^{®}-Polyether-Polyole der Firma Bayer MaterialScience oder die Voranol^{™}-Polyether-Polyole der Firma Dow Chemical.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens trifunktionelle Polyester eingesetzt werden. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid, Zitronensäure oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol. 1,5-Pentandiol, Neopentylglykol, 1,6-Hexandiol, 1,4-Bis(hydroxymethyl)cyclohexan, Diethylenglykol, Dipropylenglykol, Trimethylolpropan, Glycerin, Pentaerythrit oder Gemische aus den genannten Alkoholen verwendet. Werden als Alkoholkomponente mehrwertige Polyetherpolyole eingesetzt, so erhält man Polyesteretherpolyole die ebenfalls als Startersubstanzen zur Herstellung der Additive (I) dienen können. Bevorzugt werden Polyetherpolyole mit Mn = 150 bis 2000 g/mol zur Herstellung der Polyesteretherpolyole eingesetzt.

Die H-funktionellen Startersubstanzen weisen im Allgemeinen eine Funktionalität (d.h. Anzahl an für die Polymerisation aktiven H -Atome pro Molekül) von 3 bis 10, bevorzugt von 3 bis 8 auf. Die H-funktionelle Startersubstanzen werden entweder einzeln oder als Gemisch aus mindestens zwei H-funktionellen Startersubstanzen eingesetzt.

Bevorzugte H-funktionelle Startersubstanzen sind Alkohole wie Glycerin, Trimethylolpropan, Pentaerythrit, Sorbitol, Saccharose, Umsetzungsprodukte der Alkohole mit ε-Caprolacton, z.B. Umsetzungsprodukte von Trimethylolpropan mit ε-Caprolacton, Umsetzungsprodukte von Glycerin mit ε-Caprolacton, Umsetzungsprodukte von Pentaerythrit mit ε-Caprolacton, Umsetzungsprodukte von Sorbitol mit ε-Caprolacton, sowie Umsetzungsprodukte von Saccharose mit ε-Caprolacton.

Erfindungsgemäß bevorzugte Verbindungen (V) weisen eine Funktionalität von mindestens 3, bevorzugt von 3 bis 10 und ganz besonders bevorzugt von 3 bis 8 auf. Im Falle des Einsatzes mehrere Verbindungen (V) können von ganzen Zahlen abweichende Funktionalitäten auftreten, die sich dann auf die eingesetzte Mischung beziehen, wie zum Beispiel eine Funktionalität von 3,1-10, z.B. 3,5 oder 4,5.

Erfindungsgemäß bevorzugte Verbindungen (V) weisen ein zahlenmittleres Molekulargewicht von 600 bis 6000, vorzugsweise 650 bis 5000, besonders bevorzugt 670 bis 4500 auf. Dies entspricht einer bevorzugten Ausführungsform der Erfindung. Die zuvor angeführten zahlenmittleren Molekulargewichte sind in Anlehnung an DIN 55672-1:2007-8 durch Gel-Permeations-Chromatographie (GPC) bestimmte zahlenmittlere Molekulargewichte, wobei die Kalibrierung gegen einen Polypropylenglycolstandard (76 - 6000 g/mol) erfolgte. Vorzugsweise enthalten die erfindungsgemäßen Verbindungen (V) 60 bis 85 Gew.-% Ethylenoxid und 15 bis 40 Gew.-% Propylenoxid, Gew.-% bezogen auf den Gesamtalkylenoxidgehalt der Verbindung (V) gemäß Formel (I).

Die Menge an Additivzusammensetzung wird vorzugsweise so gewählt, dass 0,1 bis 10 Gew.-Teile, insbesondere 0,5 bis 8 Gew.-Teile an Verbindungen (V) pro 100 Teilen des insgesamt eingesetzten Polyol eingesetzt werden. Im Sinne der vorliegenden Erfindung wird unterschieden zwischen der Verbindung (V) und anderen Polyolen. Auch die Verbindung (V) ist ein Polyol. In der vorgenannten Mengenbeziehung bezieht sich der Ausdruck des insgesamt eingesetzten Polyol auf dasjenige Polyol, das ungleich der Verbindung (V) ist.

Vorzugsweise wird das PU-System, insbesondere der PU-Schaum, dadurch erzeugt, dass eine Mischung enthaltend zumindest einen Urethan- und/oder Isocyanurat-Katalysator, zumindest ein Treibmittel und/oder Wasser, zumindest eine Isocyanatkomponente und eine Polyolmischung in Gegenwart des erfindungsgemäßen Additivs verschäumt wird.

Neben den bereits genannten Komponenten kann die Mischung weitere übliche Bestandteile aufweisen, wie z. B. optional (weitere) Treibmittel, optional Präpolymere, optional Flammschutzmittel und optional weitere Additive (die von den in der erfindungsgemäßen Additivzusammensetzung genannten verschieden sind), wie z. B. Füllstoffe, Emulgatoren, die vorzugsweise auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Vernetzer, Antioxidantien, UV-Stabilisatoren, Biozide oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat, Polyol, Präpolymer, Stabilisatoren, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird: EP 0152878 A1, EP 0409035 A2, DE 102005050473 A1, DE 19629161 A1, DE 3508292 A1, DE 4444898 A1, EP 1061095 A1, EP 0532939 B1, EP 0867464 B1, EP 1683831 A1 und DE 102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Weitere Tenside, die bei der Herstellung von Polyurethanweichschaumstoffen eingesetzt werden, können z. B. ausgewählt sein aus der Gruppe umfassend nichtionische Tenside und/oder amphotere Tenside.

Als Tenside können erfindungsgemäß beispielsweise auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Schaumstabilisatoren können vorzugsweise jene eingesetzt werden, die aus dem Stand der Technik bekannt sind und auf die auch üblicherweise zur Polyurethanschaumstabilisierung zurückgegriffen wird. Hierbei kann es sich sowohl um Si-haltige und nicht Si-haltige, insbesondere Si-haltige und nicht Si-haltige organische Stabilisatoren und Tenside handeln. Die Si-haltigen Stabilisatoren werden weiterhin darin unterschieden, ob der Polyoxyalkylenblock mit dem Polysiloxanblock durch eine hydrolytisch stabile C-Si-Bindung (wie beispielsweise in EP 2 182 020) oder die hydrolytisch weniger stabile C-O-Si-Bindung verknüpft ist. Die zur Polyurethanschaumstabilisierung verwendbaren SiC-Polysiloxan-Polyoxyalkylen-Blockmischpolymerisate können z.B. durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1520870 beschrieben, hergestellt werden. Die Hydrosilylierung kann batchweise oder kontinuierlich, wie beispielsweise in der DE 19859759 C1 beschrieben, durchgeführt werden.

Eine Vielzahl weiterer Schriften, wie beispielsweise die EP 0493836 A1, US 5565194 oder EP 1350804 offenbaren jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen.

Als Biozide können handelsübliche Produkte verwendet werden, wie Chlorophen, Benzisothiazolinon, Hexahydro-1,3,5-tris(hydroxyethyl-s-triazin), Chlormethylisothiazolinon, Methylisothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Geeignete Flammschutzmittel im Sinne dieser Erfindung sind alle Substanzen, die im Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP), Tris(1,3-dichlor-2-propyl)phosphat (TDCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet. Alle diese Flammschutzmittel und Kombinationen daraus können im Sinne dieser Erfindung vorteilhafterweise benutzt werden, darin enthalten auch alle kommerziell erhältlichen Flammschutzmittel der Firmen Great Lakes Solutions (Chemtura) (z.B.: DP-54^{™}, Firemaster^{®} BZ-54 HP, Firemaster^{®} 550, Firemaster^{®} 552, Firemaster^{®} 600, Firemaster^{®} 602, Reofos^{®} 50, Reofos^{®} 65, Reofos^{®} 95, Kronitex^{®} CDP), ICL Industrial Products (z.B.: FR-513, FR-1210, FR-1410, Fyrol^{™} FR-2, Fyrol^{™} 38, Fyrol^{™} HF-5, Fyrol^{™} A300TB, Fyrol^{™} PCF, Fyrol^{™} PNX, Fyrol^{™} PNX-LE), Clariant (z.B.: Exolit^{®} OP 550 oder Exolit^{®} OP 560).

Oftmals werden alle Komponenten außer den Polyolen und Isocyanaten vor dem Verschäumen zu einer Aktivatorlösung vermischt. Diese enthält dann vorzugsweise u.a. das erfindungsgemäß verwendbare Additiv, Stabilisatoren, Katalysatoren bzw. Katalysatorkombination, das Treibmittel, beispielsweise Wasser, sowie eventuell weitere Additive, wie Flammschutz, Farbe, Biozide etc., je nach Rezeptur des Polyurethanweichschaumstoffs. Auch eine solche Aktivatorlösung kann eine erfindungsgemäße Zusammensetzung sein.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 10 Teilen, bevorzugt zwischen 1 und 7 Teilen, besonders bevorzugt zwischen 1 und 5 Teilen, bezogen auf 100,0 Teile Polyol, liegen. Darüber hinaus können alternativ und/oder auch zusätzlich, physikalische Treibmittel, eingesetzt werden. Dabei handelt es sich um Flüssigkeiten, welche gegenüber den Rezepturbestandteilen inert sind und Siedepunkte unter 100 °C, vorzugsweise unter 50 °C, insbesondere zwischen -50 °C und 30 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Ketone wie Aceton und/oder Methylethylketon, Kohlenwasserstoffe, wie n-, iso- oder Cyclopentan, n- oder iso-Butan und Propan, Cyclohexan, Ether, wie Dimethylether und Diethylether, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, Trichlorfluormethan, Dichlortetrafluorethan und 1,1,2-Trichlor-1,2,2-trifluorethan. Des Weiteren kann auch Kohlendioxid eingesetzt werden. Auch Gemische dieser niedrigsiedenden Flüssigkeiten untereinander und/oder mit anderen substituierten oder unsubstituierten Kohlenwasserstoffen können verwendet werden. Die Verschäumung kann sowohl unter Normaldruck, als auch unter vermindertem Druck ablaufen (VPF-Technologie).

Die Menge des physikalischen Treibmittels liegt dabei vorzugsweise im Bereich zwischen 1 bis 30 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, Antioxidantien, UV-Stabilisatoren, Farbstoffe, Biozide, Pigmente, Zellöffner, Vernetzer und dergleichen.

Zur Herstellung eines Polyurethanweichschaumstoffs wird vorzugsweise ein Gemisch (Mischung) aus Polyol, di- oder polyfunktionellem Isocyanat, erfindungsgemäßem Additiv, Aminkatalysator, Kalium-, Zink- und/oder Zinn-organischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, Antioxidantien, UV-Stabilisatoren, Farbpasten, Bioziden, Füllstoffen, Vernetzern oder sonstigen üblichen Verarbeitungshilfsmitteln, umgesetzt. Ein solches Gemisch stellt ebenfalls einen Gegenstand der Erfindung dar. Ein Gemisch, umfassend das erfindungsgemäß einzusetzende Additiv und Polyol stellt ebenfalls einen Gegenstand der Erfindung dar sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-lsocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluylendiisocyanat, Gemische aus Diphenylmethandiisocyanat-Isomeren, Gemische aus Diphenylmethandiisocyanat und Polyphenylpolymethylpolyisocyanat oder Toluylendiisocyanat mit Diphenylmethandiisocyanat und/oder Polyphenylpolymethylpolyisocyanat oder so genannte Präpolymere.

Es können sowohl TDI (2,4- und 2,6-Toluylendiisocyanat-lsomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Präpolymere. Weitere geeignete Isocyanate sind in der Patentschrift EP 1095968 aufgeführt, auf die hier im vollen Umfang Bezug genommen wird.

Eine besonders bevorzugte Ausführungsform liegt vor, wenn als Isocyanat-Komponente TDI-80 verwendet wird.

Als Vernetzer werden niedermolekulare, gegenüber Isocyanaten reaktive mehrfunktionelle Verbindungen bezeichnet. Geeignet sind z.B. polyfunktionelle, insbesondere di- und trifunktionelle Verbindungen mit Molekulargewichten von 62 bis 1000 g/mol, vorzugsweise 62 bis 600 g/mol. Verwendung finden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diaminodiphenylmethan, 3,3'-dialkylsubstituierte 4,4'-Diaminodiphenylmethane, 2,4- und 2,6- Toluylendiamin und vorzugsweise aliphatische Diole und Triole mit 2 bis 6 Kohlenstoffatomen, wie Ethylenglykol, Propylenglykol, 1,4-Butylenglykol, 1,6-Hexamethylenglykol, 2-Methyl-1,3-propanediol Glycerin und Trimethylolpropan oder Ricinusöl oder Pentaerythrit, sowie höherwertige Alkohole, wie Zuckeralkohole, beispielsweise Saccharose, Glucose oder Sorbit und alkoxylierte Verbindungen aller zuvor genannten Beispiele.

Die erfindungsgemäßen Additive können insbesondere in der Blockverschäumung eingesetzt werden. Es können alle dem Fachmann bekannten Verfahren zur Herstellung von frei gestiegenen Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäß einsetzbaren Additivzusammensetzungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole.

Es kann sich hierbei z. B. um Polyether- oder Polyesterpolyole handeln, die typischerweise 2 bis 8 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glycerin, Trimethylolpropan oder Ricinusöl oder Pentaerythrit, sowie höherwertige Alkohole, wie Zuckeralkohole, beispielsweise Saccharose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Polyesterpolyole können durch Polykondensationsreaktion oder durch ringöffnende Polymerisation dargestellt werden. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol. 1,5-Pentandiol, Neopentylglykol, 1,6-Hexandiol, 1,4-Bis(hydroxymethyl)cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyetherpolycarbonatpolyole dienen können. Bevorzugt werden Polyetherpolyole mit Mn = 150 bis 2000 g/mol zur Herstellung der Polyesteretherpolyole eingesetzt.

Die Polyetherpolyole, vorzugsweise Polyoxypropylenpolyoxyethylenpolyole besitzen typischerweise eine Funktionalität von 2 bis 8 und zahlengemittelte Molekulargewichte vorzugsweise im Bereich von 500 bis 8000, vorzugsweise 800 bis 4500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von hochelastischen Polyurethan-Weichschaumstoffen (Kaltschaum) zwei- und/oder dreifunktionelle Polyetheralkohole eingesetzt, die bevorzugt über 50 mol-% primäre Hydroxylgruppen bezogen auf die Summe der Hydroxylgruppen aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht. Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man verwendet unter anderem:
SAN-Polyole: Dies sind hochreaktive Polyole, welche ein Copolymer auf der Basis Styrol/Acrylnitril (SAN) dispergiert enthalten.

PHD-Polyole: Dies sind hochreaktive Polyole, welche Polyharnstoff ebenfalls in dispergierter Form enthalten.

PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Eine weitere Klasse von einsetzbaren Polyolen stellen die sogenannten autokatalytischen Polyole, insbesondere autokatalytische Polyetherpolyole, dar. Solche Polyole basieren zum Beispiel auf Polyether-Blöcken, vorzugsweise auf Ethylenoxid- und/oder Propylenoxid-Blöcken, und beinhalten zudem katalytisch aktive funktionelle Gruppen, wie zum Beispiel stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von Polyurethansystemen, insbesondere von Polyurethanschaumstoffen, bevorzugt von Polyurethanweichschaumstoffen, kann die benötigte Menge an ggf. zusätzlich verwendeten Katalysatoren je nach Anwendung gegebenenfalls reduziert und/oder auf spezielle gewünschte Schaumeigenschaften angepasst werden. Geeignete Polyole sind zum Beispiel in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) oder WO2013102053 (A1) beschrieben und können zum Beispiel unter den Handelsnamen Voractiv^{™} und/oder SpecFlex^{™} Activ bei der Firma Dow bezogen werden.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung) IsocyanatTrimerisierung (Isocyanurat-Bildung), Isocyanat-Isocyanat mit CO₂-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretimid-Bildung) eingesetzt werden. Geeignete Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Geeignete stickstoffhaltige Verbindungen als Katalysatoren, im Folgenden auch als stickstoffhaltige Katalysatoren bezeichnet, im Sinne der vorliegenden Erfindung sind alle stickstoffhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können.

Beispiele für geeignete stickstoffhaltige Verbindungen als Katalysatoren im Sinne der vorliegenden Erfindung sind bevorzugt Amine, insbesondere tertiäre Amine oder Verbindungen enthaltend eine oder mehrere tertiäre Amin-Gruppen, wie unter anderem die Amine Triethylamin, N,N-Dimethylcyclohexylamin, N,N-Dicyclohexylmethylamin, N,N-Dimethylaminoethylamin, N,N,N',N'-Tetramethylethylen-1,2-diamin, N,N,N',N'-Tetramethylpropylen-1,3-diamin, N,N,N',N'-Tetramethyl-1,4-butandiamin, N,N,N',N'-Tetramethyl-1,6-hexandiamin, N,N,N',N",N"-Pentamethyldiethylentriamin, N,N,N'-Trimethylaminoethylethanolamin, N,N-Dimethylaminopropylamin, N,N-Diethylaminopropylamin, N,N-Dimethylaminopropyl-N',N'-dipropan-2-olamin, 2-[[3-(dimethylamino)propyl]methylamino]ethanol, 3-(2-Dimethylamino)ethoxy)-propylamin, N,N-Bis[3-(dimethylamino)propyl]-amin, N,N,N',N",N"-Pentamethyldipropylen-triamin, 1-[Bis[3-(dimethylamino)propyl]amino]-2-propanol, N,N-Bis[3-(dimethylamino)propyl]-N',N'-dimethylpropan-1,3-diamin, Triethylendiamin, 1,4-Diazabicyclo[2.2.2]octane-2-methanol, N,N'-Dimethylpiperazin, 1,2-Dimethylimidazol, N-(2-Hydroxypropyl)imidazol, 1-lsobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-Dimethylaminoethanol, N,N-Diethylaminoethanol, 3-Dimethylamino-1-propanol, N,N-Dimethylaminoethoxyethanol, N,N-Diethylaminoethoxyethanol, Bis(2-Dimethylaminoethylether), N,N,N'-Trimethyl-N'-(2-hydroxyethyl)bis(2-aminoethyl)ether, N,N,N'-Trimethyl-N-3'-aminopropyl(bisaminoethyl)ether, Tris(dimethylaminopropyl)hexahydro-1,3,5-triazin, 1,8-Diazabicyclo[5.4.0]undec-7-en, 1,5-Diazabicyclo[4.3.0]non-5-en, 1,5,7-triazabicyclo-[4.4.0]dec-5-en, N-Methyl-1,5,7-triazabicyclo[4.4.0]dec-5-en, 1,4,6-triazabicyclo[3.3.0]oct-4-en, 1,1,3,3-Tetramethylguanidin, tert-Butyl-1,1,3,3-Tetramethylguanidin, Guanidin, 3-Dimethylaminopropylharnstoff, 1,3-Bis[3-(dimethylamino)propyl]harnstoff, Bis-N,N-(dimethylaminoethoxy-ethyl)isophorondicarbamat, 3-Dimethylamino-N,N-dimethylpropionamid und 2,4,6-Tris(dimethylaminomethyl)phenol. Geeignete stickstoffhaltige Katalysatoren, nach dem Stand der Technik, können zum Beispiel von der Firma Evonik unter dem Handelsnamen TEGOAMIN^{®} bezogen werden.

Je nach Anwendung kann es bevorzugt sein, dass bei der erfindungsgemäßen Herstellung von Polyurethanschaumstoffen, quaternisierte und/oder protonierte stickstoffhaltige Katalysatoren, insbesondere quaternisierte und/oder protonierte tertiäre Amine, eingesetzt werden.

Zur möglichen Quaternisierung stickstoffhaltiger Katalysatoren können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Katalysatoren können, sofern quaternisiert, einfach oder mehrfach quaternisiert sein. Vorzugsweise sind die stickstoffhaltigen Katalysatoren nur einfach quaternisiert. Bei einfacher Quaternisierung sind die stickstoffhaltigen Katalysatoren vorzugsweise an einem tertiären Stickstoffatom quaternisiert.

Stickstoffhaltige Katalysatoren können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Bor-basierende Säuren eingesetzt werden.

Der Einsatz stickstoffhaltigen Katalysatoren, die nicht quaternisiert oder protoniert sind, ist im Sinne dieser Erfindung allerdings besonders bevorzugt.

Geeignete metallhaltige Verbindungen als Katalysatoren, im Folgenden auch als metallhaltige Katalysatoren bezeichnet, im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können. Sie können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt lonenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder - Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallorganische Salze und organische Metallsalze, wie oben definiert, als Katalysatoren im Sinne der vorliegenden Erfindung sind zum Beispiel Organozinn-, Zinn-, Zink-, Bismuth und Kalium-Salze, insbesondere entsprechende Metall-Carboxylate, -Alkoholate, - Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercapto-acetat, Dimethylzinn-bis-2-ethylhexylmercaptoacetat, Dibutylzinn-bis-2-ethylhexylmercapto-acetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zinn(II)-oleat, Zink(II)-acetat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kaliumricinoleat.

Bei der erfindungsgemäßen Herstellung von Polyurethanschaumstoffen, kann es bevorzugt sein, die Verwendung von metallorganischen Salzen wie zum Beispiel von Dibutylzinndilaurat auszuschließen.

Geeignete metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Bei der erfindungsgemäßen Herstellung von Polyurethanschaumstoffen, kann es je nach Art der Anwendung, bevorzugt sein, einbaubare/reaktive oder hochmolekulare Katalysatoren zu verwenden. Solche Katalysatoren können zum Beispiel ausgewählt werden aus der Gruppe der metallhaltigen Verbindungen, vorzugsweise aus der Gruppe der Zinn-, Zink-, Bismuth- und/oder Kalium-haltigen Verbindungen, insbesondere aus der Gruppe der Metall-Carboxylate der vorgenannten Metalle wie zum Beispiel die Zinn-, Zink-, Bismuth- und/oder Kaliumsalze der Isononansäure, Neodecansäure, Ricinolsäure und/oder Ölsäure, und/oder aus der Gruppe der stickstoffhaltigen Verbindungen, insbesondere aus der Gruppe der emissionsarmen Amine und/oder der emissionsarmen Verbindungen enthaltend tertiäre eine oder mehrere tertäre Amine-Gruppen, beispielsweise beschrieben durch die Amine Dimethylaminoethanol, N,N-Dimethyl-N',N'-di(2-hydroxypropyl)-1,3-diaminopropan, N,N-Dimethylaminopropylamin, N,N,N'-Trimethyl-N'-hydroxyethylbis(aminoethyl)ether, 6-Dimethylaminoethyl-1-hexanol, N-(2-Hydroxypropyl)-imidazol, N-(3-Amino-propyl)imidazol, Aminopropyl-2-methylimidazol, N,N,N'-Trimethyl-aminoethanolamin, 2-(2-(N,N-Dimethylaminoethoxy)ethanol, N-(Dimethyl-3-aminopropyl)-harnstoff-derivate und Alkylaminooxamide, wie Bis-(N-(N',N'-dimethylaminopropyl))oxamid, Bis-(N-(N',N'-dimethylaminoethyl))-oxamid, Bis-(N-(N',N'-Imidazolidinylpropyl)oxamid, Bis-(N-(N',N'-diethylaminoethyl))-oxamid, Bis-(N-(N',N'-diethylaminopropyl)oxamid, Bis-(N-(N',N'-diethylaminoethyl)oxamid, Bis-(N-(N',N'-diethylimino-1-methylpropyl)oxamid, Bis-(N-(3-Morpholinopropylyl)-oxamid und deren Umsetzungsprodukte mit Alkylenoxiden, vorzugsweise mit einem Molgewicht im Bereich zwischen 160 und 500 g/mol, sowie Verbindungen der allgemeine Formel:

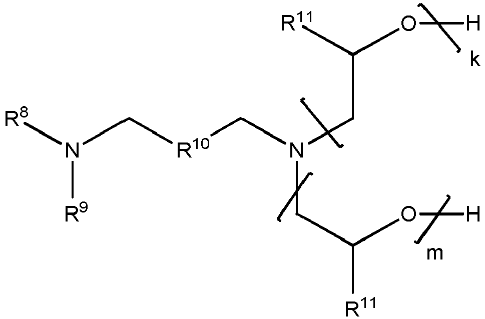

Mit
R⁸, R⁹ = -CₐH₂ₐ₊ᵢ mit a = 1 - 4 für acylische Gruppen
R⁸, R⁹ = -C_{b}H_{c}N_{d-} mit b = 3 - 7, c = 6 - 14, d = 0 - 2 für cyclische Gruppen
R¹⁰ = CₑH_{f}O₉ mit e = 0-4, f = 0 - 8, g = 0 - 2
R¹¹ = -H, -CH₃, -C₂H₅
k, m = gleich oder verschieden 1-5.

Derartige Katalysatoren und/oder Mischungen werden beispielsweise unter dem Namen Jeffcat^{®} ZF-10, Lupragen^{®} DMEA, Lupragen^{®} API, Toyocat^{®} RX 20 und Toyocat^{®} RX 21 , DABCO^{®} RP 202, DABCO^{®} RP 204, DABCO^{®} NE 300, DABCO^{®} NE 310, DABCO^{®} NE 400, DABCO^{®} NE 500, DABCO^{®} NE 600, DABCO^{®} NE 1060 und DABCO^{®} NE 2039, Niax^{®} EF 860, Niax^{®} EF 890, Niax^{®} EF 700, Niax^{®} EF 705, Niax^{®} EF 708, Niax^{®} EF 600, Niax^{®} EF 602, Kosmos^{®} 54, Kosmos^{®} EF, und Tegoamin^{®} ZE 1 im Handel angeboten.

Geeignete Einsatzmengen an Katalysatoren richten sich nach dem Typ des Katalysators und liegen vorzugsweise im Bereich von 0,005 bis 10,0 pphp, besonders bevorzugt im Bereich von 0,01 bis 5,00 pphp (= Gewichtsteile bezogen auf 100 Gewichtsteile Polyol) bzw. 0,10 bis 10,0 pphp für Kaliumsalze.

Je nach Anwendung kann es bevorzugt sein, dass bei der erfindungsgemäßen Herstellung von Polyurethanschaumstoffen, ein oder mehrere stickstoffhaltige und/oder metallhaltige Katalysatoren eingesetzt werden. Wenn mehr als ein Katalysator eingesetzt wird, können die Katalysatoren in beliebigen Gemischen untereinander eingesetzt werden. Hierbei können die Katalysatoren einzeln während der Verschäumung, zum Beispiel im Sinne einer Vordosierung im Mischkopf, und/oder als vorgemischte Katalysatorkombination eingesetzt werden.

Der Ausdruck "vorgemischte Katalysatorkombination", im Folgenden auch als Katalysatorkombination bezeichnet, umfasst im Sinne dieser Erfindung insbesondere fertige Mischungen von metallhaltigen Katalysatoren und/oder stickstoffhaltigen Katalysatoren und/oder entsprechenden protonierten und/oder quaternisierten stickstoffhaltigen Katalysatoren sowie optional noch weiterer Inhalts- oder Zusatzstoffen wie zum Beispiel Wasser, organischen Lösungsmittelen, Säuren zur Blockierung der Amine, Emulgatoren, Tenside, Treibmitteln, Antioxidantien, Flammschutzmittel, Stabilisatoren und/oder Siloxanen, vorzugsweise Polyethersiloxanen, die bereits vor der Verschäumung als solche vorliegen und während der Verschäumungsvorgangs nicht als Einzelkomponenten zugegeben werden müssen.

Je nach Anwendung kann es bevorzugt sein, wenn aus der Summe aller eingesetzten stickstoffhaltigen Katalysatoren, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktion von stickstoffhaltigen Katalysatoren mit metallhaltigen Katalysatoren, insbesondere Kalium-, Zink- und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Ebenfalls Gegenstand der vorliegenden Erfindung ist ein Verfahren zur Herstellung von Polyurethanschäumen durch Umsetzung
(a) einer oder mehrerer Polyolkomponenten mit
(b) einer oder mehrerer Isocyanatkomponenten,
   in Gegenwart
(c) des erfindungsgemäßen Additivs, wie zuvor beschrieben,
(d) von Katalysatoren,
(e) von Wasser und gegebenenfalls organischen Treibmitteln,
(g) von Stabilisatoren und gegebenenfalls Emulgatoren und
(f) gegebenenfalls von sonstigen Zusatzstoffen.

Das Verfahren ermöglicht die Bereitstellung von Polyurethanschäumen mit erhöhter Härte und hinreichender Offenzelligkeit sowie verbesserter Alterungsbeständigkeit.

Im Sinne der vorliegenden Erfindung wird unterschieden zwischen der Verbindung (V) und anderen Polyolkomponenten. Auch die Verbindung (V) ist eine Polyolkomponente. In dem vorgenannten Verfahren umfasst der Begriff "Polyolkomponenten" solches Polyol ungleich der Verbindung (V).

Mit dem erfindungsgemäßen Polyurethansystem, insbesondere Polyurethanschaum, sind Artikel zugänglich, die dieses Polyurethansystem, insbesondere Polyurethanschaum, enthalten oder aus ihm bestehen. Diese Artikel stellen einen weiteren Gegenstand dieser Erfindung dar. Solche Artikel sind insbesondere Möbelpolster oder Matratzen.

Ein weiterer Gegenstand dieser Erfindung ist außerdem ein Polyurethanschaum, enthaltend die Umsetzungsprodukte einer oder mehrerer Polyolkomponenten, mit einer oder mehrerer Isocyanatkomponenten, wobei als Vernetzer zumindest eine Verbindung (V) der Formel (I), wie oben genau beschrieben, fungierte, insbesondere ein Polyurethanschaum, erhältlich nach dem erfindungsgemäßen Verfahren wie zuvor beschrieben.

Ein weiterer Gegenstand der Erfindung ist die Verwendung des erfindungsgemäßen Polyurethanschaums als Verpackungsschaum, Matratze, Möbelpolster, Werkstoff in Kraftfahrzeuginnenräumen, Automobil-Sitzpolster, Kopfstütze, Automobil-Innenverkleidung, Schallabsorptionsmaterial, Schuhsole, Teppichrückseitenschaum, Filterschaum, oder zur Herstellung entsprechender Produkte, insbesondere als Werkstoff in Kraftfahrzeuginnenräumen. Besonders bevorzugt ist die Verwendung als Matratze, Möbelpolster, Werkstoff in Kraftfahrzeuginnenräumen, Automobil-Sitzpolster, Kopfstütze, Schallabsorptionsmaterial, oder zur Herstellung entsprechender Produkte, insbesondere als Werkstoff in Kraftfahrzeuginnenräumen.

Eine bevorzugte erfindungsgemäße Zusammensetzung zur Herstellung eines Polyurethansystems, insbesondere von Polyurethanschaum, kann Polyol in Mengen von 25 bis 80 Gew.-%, Wasser in Mengen von 1 bis 5 Gew.-%, Katalysator in Mengen von 0,05 bis 1 Gew.-%, physikalisches Treibmittel in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) in Mengen von 0,1 bis 5 Gew.-%, Isocyanat in Mengen von 20 bis 50 Gew.% und erfindungsgemäße Verbindungen (V) in Mengen von 0,001 bis 10 Gew.-%, vorzugsweise 0,1 bis 5 Gew-%, enthalten.

Bezüglich bevorzugter Ausführungsformen dieser vorgenannten Zusammensetzungen wird ausdrücklich auf die vorangegangene Beschreibung verwiesen.

Ein weiterer Gegenstand der Erfindung ist die Verwendung eines erfindungsgemäßen Additivs zur Verbesserung der Härte von Polyurethanweichschaum und/oder zur Verbesserung der Alterungseigenschaften von Polyurethanweichschaum im Zuge der Schaumherstellung. Dabei gelingt die Verbesserung der Härte von Polyurethanweichschaum bei hinreichender Offenzelligkeit. Unter hinreichender Offenzelligkeit wird insbesondere verstanden, dass die Gasdurchlässigkeit des erfindungsgemäßen Polyurethanschaums vorzugsweise von 1 bis 300 mm Wassersäule, bevorzugt 3 bis 250 mm Wassersäule in Anlehnung an DIN EN ISO 4638:1993-07 beträgt. Der Einsatz des erfindungsgemäßen Additivs ermöglicht insofern eine Verbesserung der Härte als dass die Härte des Schaumstoffs höher ist als diejenige von solchem Schaumstoff, der ohne das erfindungsgemäße Additiv aber in ansonsten analoger Weise bereitgestellt wurde. Die Verbesserung der Alterungseigenschaften von Polyurethanweichschaum bezieht sich insbesondere auf die mechanische Beanspruchung des Schaumstoffs und zwar kann zur Untersuchung der Alterungseigenschaften ein Verfahren in Anlehnung an ISO 3385-1975 durchgeführt werden, bei dem ein Schaummuster 80000 mal bis auf 70% seiner Ursprungshöhe zusammengedrückt und der Verlust an Dicke und Härte ermittelt. Der Einsatz des erfindungsgemäßen Additivs ermöglicht insofern eine Verbesserung der Alterungseigenschaften als dass der Verlust an Dicke und Härte des Schaumstoffs geringer ist als von solchem Schaumstoff, der ohne das erfindungsgemäße Additiv in ansonsten analoger Weise bereitgestellt wurde.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele

### Herstellung der erfindungsgemäßen Additive

### Beispiel 1 (erfindungsgemäß)

In einem 10 I Rührautoklaven wurden 500 g Pentaerythrit und 110 g wässrige Kaliumhydroxidlösung (47 %) vorgelegt und bei 90°C und vermindertem Druck (25 mbar) während 1 Stunde das Alkoholat gebildet. Der Druck wurde mit Stickstoff ausgeglichen und die Reaktionstemperatur auf 120°C erhöht und mit konstanter Geschwindigkeit während 4 Stunden 1705 g Propylenoxid zudosiert. Nach einer Nachreaktionszeit von 2 Stunden wurden die Restmonomere unter reduziertem Druck entfernt (1 mbar, 30 Minuten, 110°C). Nachdem zur Inertisierung 2,8 bar Stickstoff aufgepresst wurden, wurden in einem zweiten Dosierblock 5173 g Ethylenoxid während 4 Stunden bei 120°C zudosiert. Nach einer zweiten Nachreaktionszeit von 2 Stunden und erneutem Entfernen der Restmonomere unter vermindertem Druck (1 mbar, 30 Minuten, 110°C) wurde das Rohprodukt hydrolysiert, mit Phosphorsäure neutralisiert und anschließend vakuumdestilliert und filtriert. Das so erhaltene Produkt besaß eine Hydroxyl-Zahl von 209,4 mg KOH/g, einen Gehalt an primären Hydroxyl-Gruppen von 92 % der gesamten Hydroxylgruppen und einen Restwassergehalt von 0,02 Gew.-%, bezogen auf das Gesamtgewicht des Produkts. Der Ethylenoxidanteil im Molekül betrug 75 Gew.-% bezogen auf den Gesamtalkylenoxidgehalt.

### Beispiel 2

In einem 10 I Rührautoklaven wurden 500 g Sorbitol und 30 g wässrige Kaliumhydroxidlösung (47 %) vorgelegt und bei 90°C und vermindertem Druck (25 mbar) während 1 Stunde das Alkoholat gebildet. Der Druck wurde mit Stickstoff ausgeglichen und die Reaktionstemperatur auf 120°C erhöht und mit konstanter Geschwindigkeit während 5 Stunden ein Gemisch aus 1910 g Propylenoxid und 2173 g Ethylenoxid zudosiert. Nach einer Nachreaktionszeit von 3 Stunden wurden die Restmonomere unter reduziertem Druck entfernt (1 mbar, 60 Minuten, 110°C). Anschließend wurde das Rohprodukt hydrolysiert, mit Phosphorsäure neutralisiert und darauffolgend vakuumdestilliert und filtriert. Das so erhaltene Produkt besaß eine Hydroxyl-Zahl von 202,1 mg KOH/g, einen Gehalt an primären Hydroxyl-Gruppen von 36 % der gesamten Hydroxylgruppen und einen Restwassergehalt von 0,01 Gew.-%, bezogen auf das Gesamtgewicht des Produkts. Der Ethylenoxidanteil im Molekül betrug 53 Gew.-% bezogen auf den Gesamtalkylenoxidgehalt.

### Beispiel 3 (nicht erfindungsgemäß)

In einem 10 I Rührautoklaven wurden 500 g Sorbitol und 30 g wässrige Kaliumhydroxidlösung (47 %) vorgelegt und bei 90°C und vermindertem Druck (25 mbar) während 1 Stunde das Alkoholat gebildet. Der Druck wurde mit Stickstoff ausgeglichen und die Reaktionstemperatur auf 120°C erhöht und mit konstanter Geschwindigkeit während 5 Stunden 3820 g Propylenoxid zudosiert. Nach einer Nachreaktionszeit von 2 Stunden wurden die Restmonomere unter reduziertem Druck entfernt (1 mbar, 30 Minuten, 110°C). Anschließend wurde das Rohprodukt hydrolysiert, mit Phosphorsäure neutralisiert und darauffolgend vakuumdestilliert und filtriert. Das so erhaltene Produkt besaß eine Hydroxyl-Zahl von 214,5 mg KOH/g, einen Gehalt an primären Hydroxyl-Gruppen von 0 % der gesamten Hydroxylgruppen und einen Restwassergehalt von 0,02 Gew.-%, bezogen auf das Gesamtgewicht des Produkts. Der Ethylenoxidanteil im Molekül betrug 0 Gew.-% bezogen auf den Gesamtalkylenoxidgehalt.

### Herstellung der Polyurethanschäume

Bei den anwendungstechnischen Tests wurden vier typische Formulierungen für Polyurethanschäume, die sich wie folgt zusammensetzen, verwendet:

**Tabelle 2: Formulierung I für TDI80-Weichblockschaum-Anwendungen (25 kg/m³)**

| **Formulierung I** | **Massenteile (pphp)** |
|---|---|
| Arcol^{®} 1104¹⁾ | 100-X |
| Desmodur^{®}T 80²⁾ Index <110> | variabel³⁾ |
| Wasser | 3,8 |
| TEGOAMIN^{®} B75⁴⁾ | 0,15 |
| KOSMOS^{®} 29⁵⁾ | 0,18 |
| TEGOSTAB^{®}B 8158⁶⁾ | 0,8 |
| Schaumhärter-Additiv⁷⁾ | X |

| | |
|---|---|
| ¹⁾ Erhältlich bei der Firma Bayer MaterialScience, hierbei handelt es sich um ein glycerin-basiertes Polyetherpolyol mit einer OH-Zahl von 56 mg KOH/g. ²⁾ Toluylendiisocyanat T 80 (80 % 2,4-Isomer, 20 % 2,6-Isomer) der Firma Bayer MaterialScience, 3 mPa·s, 48 % NCO, Funktionalität 2. ³⁾ Die TDI-Menge muss je nach OH-Zahl des verwendeten Schaumhärter-Additivs angepasst werden. Der TDI-Index beträgt jedoch bei Verwendung der Formulierung I immer <110>. ⁴⁾ Amin-Katalysator der Firma Evonik Industries AG. ⁵⁾ Zinnkatalysator, erhältlich bei der Firma Evonik Industries AG: Zinn(II)-Salz der 2-Ethylhexansäure. ⁶⁾ Polyethermodifiziertes Polysiloxan, erhältlich bei der Firma Evonik Industries AG. ⁷⁾ Als Schaumhärter werden das in Beispiel 1 beschriebene, erfindungsgemäße Additiv, das in Beispiel 2 beschriebene Additiv und das in Beispiel 3 beschriebene, nicht erfindungsgemäße Additiv verwendet. | |

**Tabelle 3: Formulierung II für TDI80-Weichblockschaum-Anwendungen (16 kg/m³)**

| **Formulierung II** | **Massenteile (pphp)** |
|---|---|
| Voranol^{®} CP 3322⁸⁾ | 100-X |
| Desmodur^{®} T 80²⁾ Index <110> | variabel³⁾ |
| Wasser | 5,2 |
| TEGOAMIN^{®} 33⁴⁾ | 0,15 |
| Methylenchlorid | 7,5 |
| KOSMOS^{®} 29⁵⁾ | 0,25 |
| TEGOSTAB^{®} B 8158⁶⁾ | 1,3 |
| Schaumhärter-Additiv⁷⁾ | X |

| | |
|---|---|
| ²⁾ Toluylendiisocyanat T 80 (80 % 2,4-Isomer, 20 % 2,6-Isomer) der Firma Bayer MaterialScience, 3 mPa·s, 48 % NCO, Funktionalität 2. ³⁾ Die TDI-Menge muss je nach OH-Zahl des verwendeten Schaumhärter-Additivs angepasst werden. Der TDI-Index beträgt jedoch bei Verwendung der Formulierung II immer <110>. ⁴⁾ Amin-Katalysator der Firma Evonik Industries AG. ⁵⁾ Zinnkatalysator, erhältlich bei der Firma Evonik Industries AG: Zinn(II)-Salz der 2-Ethylhexansäure. ⁶⁾ Polyethermodifiziertes Polysiloxan, erhältlich bei der Firma Evonik Industries AG. ⁷⁾ Als Schaumhärter werden das in Beispiel 1 beschriebene, erfindungsgemäße Additiv, das in Beispiel 2 beschriebene Additiv und das in Beispiel 3 beschriebene, nicht erfindungsgemäße Additiv verwendet. ⁸⁾ Erhältlich bei der Firma Dow Chemical, hierbei handelt es sich um ein glycerin-basiertes Polyetherpolyol mit einer OH-Zahl von 48 mg KOH/g. | |

**Tabelle 4: Formulierung III für TDI-Weichblockschaum-Anwendungen zur Untersuchung der Alterung der Schaumstoffe (16 kg/m³)**

| **Formulierung III** | **Massenteile (pphp)** |
|---|---|
| Arcol^{®} 1104¹⁾ | 100-X |
| Desmodur^{®} T 80²⁾ Index <115> | variabel³⁾ |
| Wasser | 5 |
| TEGOAMIN^{®} 33⁴⁾ | 0,13 |
| Methylenchlorid | 7,84 |
| KOSMOS^{®} 29⁵⁾ | variabel9) |
| TEGOSTAB^{®} B 8228⁶⁾ | 1,68 |
| Schaumhärter-Additiv ⁷⁾ | X |

| | |
|---|---|
| ¹⁾ Erhältlich bei der Firma Bayer MaterialScience, hierbei handelt es sich um ein glycerin-basiertes Polyetherpolyol mit einer OH-Zahl von 56 mg KOH/g. ²⁾ Toluylendiisocyanat T 80 (80 % 2,4-Isomer, 20 % 2,6-Isomer) der Firma Bayer MaterialScience, 3 mPa·s, 48 % NCO, Funktionalität 2. ³⁾ Die TDI-Menge muss je nach OH-Zahl des verwendeten Schaumhärter-Additivs angepasst werden. Der TDI-Index beträgt jedoch bei Verwendung der Formulierung III immer <115>. ⁴⁾ Amin-Katalysator der Firma Evonik Industries AG. ⁵⁾ Zinnkatalysator, erhältlich bei der Firma Evonik Industries AG: Zinn(II)-Salz der 2-Ethylhexansäure. ⁶⁾ Polyethermodifiziertes Polysiloxan, erhältlich bei der Firma Evonik Industries AG. ⁷⁾ Als Schaumhärter werden das in Beispiel 1 beschriebene, erfindungsgemäße Additiv, das in Beispiel 2 beschriebene Additiv und das in Beispiel 3 beschriebene, nicht erfindungsgemäße Additiv verwendet. ⁹⁾ Für Vergleichszwecke sollten Schäume mit vergleichbarer Härte und Porosität hergestellt werden. Um diese mit identischem Index herstellen zu können, wurde die Menge an Zinnkatalysator in den einzelnen Verschäumungen variiert. | |

**Tabelle 5: Formulierung IV für CO₂ getriebene TDI80-Weichblockschaum-Anwendungen (18 kg/m³)**

| **Formulierung IV** | **Massenteile (pphp)** |
|---|---|
| Voranol^{®} CP 3322⁸⁾ | 100 |
| Desmodur^{®} T 80²⁾ Index <108> | variabel³⁾ |
| Wasser | 5 |
| TEGOAMIN^{®} B 75⁴⁾ | 0,11 |
| KOSMOS^{®} 29⁵⁾ | 0,24 |
| Kohlenstoffdioxid | 2,04 |
| TEGOSTAB^{®} B 8255⁶⁾ | 1,1 |
| Schaumhärter-Additiv ⁷⁾ | X |

| | |
|---|---|
| ²⁾ Toluylendiisocyanat T 80 (80 % 2,4-Isomer, 20 % 2,6-Isomer) der Firma Bayer MaterialScience, 3 mPa·s, 48 % NCO, Funktionalität 2. ³⁾ Die TDI-Menge muss je nach OH-Zahl des verwendeten Schaumhärter-Additivs angepasst werden. Der TDI-Index beträgt jedoch bei Verwendung der Formulierung IV immer <108>. ⁴⁾ Amin-Katalysator der Firma Evonik Industries AG. ⁵⁾ Zinnkatalysator, erhältlich bei der Firma Evonik Industries AG: Zinn(II)-Salz der 2-Ethylhexansäure. ⁶⁾ Polyethermodifiziertes Polysiloxan, erhältlich bei der Firma Evonik Industries AG. ⁷⁾ Als Schaumhärter werden das in Beispiel 1 beschriebene, erfindungsgemäße Additiv, das in Beispiel 2 beschriebene Additiv und das in Beispiel 3 beschriebene, nicht erfindungsgemäße Additiv verwendet. ⁸⁾ Erhältlich bei der Firma Dow Chemical, hierbei handelt es sich um ein glycerin-basiertes Polyetherpolyol mit einer OH-Zahl von 48 mg KOH/g. | |

### Allgemeine Durchführung zur Herstellung der Schäume

Polyurethanschäume in dieser Studie wurden entweder als Handschäume im Labor hergestellt oder in diskontinuierlichen Box-Verschäumungsanlagen. Die Herstellung der Schäume erfolgte nach folgenden Angaben bei 22 °C und 753 mm Hg Luftdruck. Schaumstoffe hergestellt nach Formulierungen I und II wurden durch Handverschäumungen im Labor hergestellt. Zur Herstellung der Polyurethanschäume nach Formulierung I wurden jeweils 400 g Polyol, zur Herstellung der Polyurethanschäume nach Formulierung II wurden jeweils 200 g Polyol eingesetzt. Polyurethanschäume erhalten nach Formulierung III wurden durch diskontinuierliche Boxverschäumung auf einer Cofama Maschine hergestellt basierend auf 9 kg Polyol (Vol. der Verschäumungsbox 1 m³). Schäume erhalten nach Formulierung IV wurden durch diskontinuierliche Boxverschäumung auf einer Hennecke Hochdruckmaschine mit NovaFlex^{®} Technologie hergestellt. Zur Herstellung der Polyurethanschäume nach Formulierung IV wurden jeweils 500 g Polyol eingesetzt; die anderen Formulierungsbestandteile wurden entsprechend umgerechnet. Dabei bedeutete beispielsweise 1,0 Teil (1,0 pphp) einer Komponente 1 g dieser Substanz je 100 g Polyol.

Für die im Labor als Handschäume hergestellten Schaumstoffe nach Formulierung I und II wurden in einem Pappbecher der Zinnkatalysator Zinn(II)-2-ethylhexanoat, die Polyole, das Wasser, die Aminkatalysatoren und das jeweilige Additiv vorgelegt und für 60 s mit einem Scheibenrührer bei 1000 U/min vermischt. Anschließend wurde das Isocyanat zugegeben und mit dem gleichen Rührer für 7 s bei 2500 U/min eingearbeitet. Dabei begann die Mischung im Becher aufzuschäumen. Deshalb wurde sie direkt nach dem Ende des Rührens in eine mit Papier ausgekleidete Verschäumungsbox gegossen. Diese hat eine Grundfläche von 30 x 30 cm und eine Höhe von 30 cm. Der Schaum stieg nach dem Eingießen in der Verschäumungsbox auf. Im Idealfall blies der Schaum bei Erreichen der maximalen Steighöhe ab und sackte dann leicht zurück. Dabei öffneten sich die Zellmembrane der Schaumbläschen und eine offenporige Zellstruktur des Schaumstoffs wurde erhalten.

Für die auf der Cofama Maschine hergestellten Schaumstoffe nach Formulierung III wurden die Polyole, das Wasser, die Aminkatalysatoren und das jeweilige Additiv vorgelegt und für 60 s mit einer Dissolverscheibe bei 500 U/min vermischt. Anschließend wurde der der Zinnkatalysator Zinn(II)-2-ethylhexanoat zugegeben und das Gemisch mit demselben Rührer für 20 s bei 500 U/min gerührt. Das Isocyanat wurde anschließend ebenfalls mit dem gleichen Rührer für 5 s bei 500 U/min eingearbeitet. Über einen konischen Auslauf wurde die Reaktionsmischung in die Verschäumungsbox überführt. Diese hat eine Grundfläche von 1 m x 1 m und eine Höhe von 1 m. Der Schaum stieg nach dem Eingießen in der Verschäumungsbox auf. Im Idealfall blies der Schaum bei Erreichen der maximalen Steighöhe ab und sackt dann leicht zurück. Dabei öffneten sich die Zellmembrane der Schaumbläschen und eine offenporige Zellstruktur des Schaumstoffs wurde erhalten.

Für die auf der Hennecke Novaflex Maschine hergestellten Schaumstoffe nach Formulierung IV wurden folgende Parameter gewählt:

| | |
|---|---|
| Austoß | 4500 g/min |
| Durchmesser Creamer | 40 mm |
| Stickstoff | 20 NI/min |
| Mischkammerdruck | 6 bar |

| **Siebpaket** | **Offenheit [%]** | **Lochgröße [µ]** |
|---|---|---|
| Vorsieb | 16 | 85 |
| Arbeitssieb 1 | 3,5 | 100 |
| Arbeitssieb 2 | 2 | 100 |
| Abschlusssieb | 23 | 100 |

### Anwendungstechnische Tests

Die hergestellten Schäume wurden anhand folgender physikalischer Eigenschaften bewertet:
a) Rücksacken des Schaumstoffes nach dem Ende der Steigphase (=Rückfall).
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe ist die Höhe des gebildeten, frei gestiegenen Schaums nach 3 Minuten. Die Schaumhöhe wird in Zentimeter (cm) angegeben.
c) Steigzeit
   Die Zeitspanne zwischen dem Ende des Mischens der Reaktionskomponenten und dem Abblasen des Polyurethanschaums.
d) Raumgewicht
   Die Bestimmung erfolgt, wie in DIN EN ISO 845:2009-10 beschrieben, durch Messung der Rohdichte. Das Raumgewicht wird in kg/m³ angegeben.
e) Porosität
   Die Luftdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
   Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.
   Die Messung erfolgt durch Einstellung des Stickstoffvordrucks per Reduzierventil auf 1 bar und Einregeln der Durchflussmenge auf 480 I/h. Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.
   Die Auswertung erfolgt durch Mittelwertbildung über die fünf erhaltenen Messwerte.
f) Zahl der Zellen pro cm (Zellzahl): Diese wird auf einer Schnittfläche optisch bestimmt (gemessen gemäß DIN EN 15702).
g) Härte
   1) Als Stauchhärte CLD 40 % nach DIN EN ISO 3386-1:1997 + A1:2010. Die Angabe der Messwerte erfolgt in Kilopascal (kPa).
   2) Als Eindruckhärte nach DIN EN ISO 2439:2008. Die Angabe der Messwerte erfolgt in Newton (N).
h) Zugfestigkeit und Bruchdehnung nach DIN EN ISO 1798:2008. Die Angabe der Messwerte der Zugfestigkeit erfolgt in Kilopascal (kPa), die der Bruchdehnung in Prozent (%).
i) Rückprallelastizität nach DIN EN ISO 8307:2007. Die Angabe der Messwerte der erfolgt in Prozent (%).

### Untersuchung der Alterungseigenschaften der erhaltenen Polyurethanschäume

Um die Alterungseigenschaften der erhaltenen Schaumstoffe zu untersuchen, wurden Polyurethanschäume verglichen, welche nach Formulierung III unter Einsatz von 9 kg Polyol in einem diskontinuierlichen Boxverschäumungsprozess gefertigt wurden. Hierbei wurden Schaumstoffe verglichen, welche entweder das erfindungsgemäße Additiv (dargestellt nach Beispielen 1), das Additiv nach Beispiel 2, das nicht erfindungsgemäße Additiv (dargestellt nach Beispiel 3) oder als Referenz gar kein Schaumhärter-Additiv enthielten. Die Schäume sollten alle bei gleichem Index (TDI-Index <115>) hergestellt werden und eine vergleichbare Eindruckhärte (bestimmbar nach DIN EN ISO 2439:2008) und eine vergleichbare Luftdurchlässigkeit (ermittelt in Anlehnung an DIN EN ISO 4638:1993-07 durch eine Staudruckmessung) aufweisen. Um dies zu erreichen wurde die Menge an Zinnkatalysator in den einzelnen Verschäumungen variiert. Der Referenzschaum ohne Schaumhärter-Additiv wurde mit 0,28 pphp KOSMOS^{®} 29 (Zinnkatalysator, erhältlich bei der Firma Evonik Industries AG: Zinn(II)-Salz der 2-Ethylhexansäure) hergestellt, wohingegen die Schäume, welche 3 pphp des erfindungsgemäßen Schaumhärter-Additivs nach Beispiel 1 oder aber 3 pphp des Additivs nach Beispiel 2 enthielten, mit einer Menge von 0,22 pphp KOSMOS^{®} 29 hergestellt wurden. Der Schaum, welcher mit 3 Teilen des nicht erfindungsgemäßen Additivs nach Beispiel 3 hergestellt wurde, enthielt lediglich 0,18 pphp KOSMOS^{®} 29.

Zur Untersuchung der Alterungseigenschaften wurde ein Verfahren in Anlehnung an ISO 3385-1975 entwickelt und durchgeführt. Hierzu wurde ein 380 mm x 380 mm x 50 mm großes Schaummuster 80000 mal bei einer Frequenz von 70 Zyklen pro Minute bis auf 70 % seiner Ursprungshöhe zusammengedrückt und wieder entspannt. Anschließend wurde der Verlust der Schaumdicke und der Verlust an Eindruckhärte ermittelt.

### Ergebnisse der Verschäumungen

Das erfindungsgemäße Additiv des Beispiels 1, das Additiv des Beispiels 2 sowie das in Beispiel 3 beschriebene, nicht erfindungsgemäße Additiv wurden in den Formulierungen I - IV ausgeprüft. Die in den Formulierungen I, II und IV dargestellten Schäume wurden jeweils mit 3 pphp und mit 5 pphp des Schaumhärter-Additivs produziert und mit Referenzschäumen verglichen, welche kein Schaumhärter-Additiv enthielten. Die Schäume, welche nach Formulierung III zur Ausprüfung der Alterungseigenschaften hergestellt wurden, enthielten lediglich 3 pphp des Schaumhärter-Additivs und wurden mit einem Referenzschaum verglichen, der kein Schaumhärter-Additiv enthielt. Die Ergebnisse der anwendungstechnischen Tests für die verschiedenen Formulierungen und verwendeten Additive sind in Tabellen 1 bis 4 wiedergegeben.

**Tabelle 6: Verschäumungsergebnisse bei Verwendung verschiedener Schaumhärter-Additive nach Formulierung I**

| Nr. | Additiv | Einsatzmenge [pphp] | | Steigzeit [s] | Steighöhe [cm] | Rückfall [cm] | Zellzahl [cm⁻¹] | Dichte [kg/m³] | Zugfestigkeit [kPa] | Ballrebound [%] | Stauchhärte (CLD 40 %) [kPa] | Steigerung Stauchhärte [%] | Porosität [mm] |
|---|---|---|---|---|---|---|---|---|---|---|---|---|---|
| | | Additiv | Polyol | | | | | | | | | | |
| 1 | Referenz | 0 | 100 | 107 | 32,5 | 0,5 | 12 | 24,3 | 84,0 | 33 | 3,5 | - | 13 |
| 2 | Bsp. 1 ^{a)} | 3 | 97 | 107 | 32,4 | 0,5 | 12 | 24,4 | 87,5 | 31 | 4,4 | 25 | 19 |
| 3 | Bsp. 1 ^{a)} | 5 | 95 | 105 | 32,4 | 0,4 | 12 | 24,6 | 85,3 | 25 | 4,7 | 34 | 33 |
| 4 | Bsp. 2 ^{a1)} | 3 | 97 | 108 | 32,4 | 0,3 | 12 | 24,6 | 86,4 | 34 | 4,5 | 28 | 24 |
| 5 | Bsp. 2 ^{a1)} | 5 | 95 | 110 | 32,6 | 0,4 | 12 | 24,5 | 84,7 | 30 | 4,8 | 37 | 42 |
| 6 | Bsp. 3 ^{b)} | 3 | 97 | 129 | 32,7 | 0,2 | 12 | 24,1 | 85,9 | 28 | 4,5 | 28 | > 300 |
| 7 | Bsp. 3 ^{b)} | 5 | 95 | 153^{c)} | n.b. | n.b. | n.b. | n.b. | n.b. | n.b. | n.b. | n.b. | n.b. |

| | | | | | | | | | | | | | |
|---|---|---|---|---|---|---|---|---|---|---|---|---|---|
| ^{a)} erfindungsgemäßes Additiv, dargestellt nach Beispiel 1 ^{a1)} Additiv, dargestellt nach Beispiel 2 ^{b)} nicht erfindungsgemäßes Additiv, dargestellt nach Beispiel 3 ^{c)} Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden. | | | | | | | | | | | | | |

**Tabelle 7: Verschäumungsergebnisse bei Verwendung verschiedener Schaumhärter-Additive nach Formulierung II**

| Nr. | Additiv | Einsatzmenge [pphp] | | Steigzeit [s] | Steighöhe [cm] | Rückfall [cm] | Zellzahl [cm⁻¹] | Dichte [kg/m³] | Zugfestigkeit [kPa] | Ballrebound [%] | Stauchhärte (CLD 40 %) [kPa] | Steigerung Stauchhärte [%] | Porosität [mm] |
|---|---|---|---|---|---|---|---|---|---|---|---|---|---|
| | | Additiv | Polyol | | | | | | | | | | |
| 8 | Referenz | 0 | 100 | 85 | 24,6 | 0,2 | 12 | 15,9 | 74,6 | 30 | 2,5 | - | 23 |
| 9 | Bsp. 1 a) | 3 | 97 | 99 | 24,4 | 0,3 | 12 | 16,0 | 80,3 | 29 | 3,1 | 24 | 30 |
| 10 | Bsp. 1 a) | 5 | 95 | 107 | 24,3 | 0,3 | 12 | 16,0 | 80,0 | 24 | 3,4 | 36 | 74 |
| 11 | Bsp. 2 a1) | 3 | 97 | 100 | 24,3 | 0,3 | 12 | 15,9 | 75,6 | 30 | 3,1 | 24 | 35 |
| 12 | Bsp. 2 a1) | 5 | 95 | 103 | 24,4 | 0,2 | 12 | 15,9 | 80,3 | 28 | 3,5 | 40 | 75 |
| 13 | Bsp. 3 b) | 3 | 97 | 122 | 24,6 | 0,1 | 12 | 15,7 | 80,1 | 25 | 3,1 | 24 | >300 |
| 14 | Bsp. 3 b) | 5 | 95 | 130 | 24,7 | 0,1 | 12 | 15,6 | 81,2 | 25 | 3,5 | 40 | >300 |

| | | | | | | | | | | | | | |
|---|---|---|---|---|---|---|---|---|---|---|---|---|---|
| ^{a)} erfindungsgemäßes Additiv, dargestellt nach Beispiel 1 ^{a1)} Additiv, dargestellt nach Beispiel 2 ^{b)} nicht erfindungsgemäßes Additiv, dargestellt nach Beispiel 3 | | | | | | | | | | | | | |

Wie in Tabelle 6 dargestellt wurde mit Formulierung I (Dichte 25 kg/m³) ohne Schaumhärter-Additiv ein Schaumstoff erhalten, welcher eine Stauchhärte bei 40 %iger Kompression von 3,5 kPa aufwies (Referenzschaum, Eintrag 1, Tabelle 6). Mit einer Luftdurchlässigkeit von 13 mm Wassersäule wurde außerdem eine sehr offenzellige Zellstruktur erhalten. Nach Zusatz von 3 pphp des analog Beispiel 1 hergestellten erfindungsgemäßen Additivs wurde ein Schaumstoff erhalten, welcher eine Stauchhärte bei 40 %iger Kompression von 4,4 kPa aufwies (Eintrag 2, Tabelle 6). Dies entspricht einer Härtesteigerung von 25 %. Bei Zusatz von 5 pphp des Additivs nach Beispiel 1 konnte eine Härtesteigerung von 34 % erreicht werden (4,7 kPa, Eintrag 3, Tabelle 6). In beiden Fällen wurden ebenfalls sehr offenzellige Porenstrukturen erhalten (19 mm H₂O, Eintrag 2 und 33 mm H₂O, Eintrag 3). Beim Einsatz von 3 pphp des Additivs dargestellt nach Beispiel 2 wurde ein offenzelliger Weichblockschaum (24 mm H₂O) mit einer Stauchhärte von 4,5 kPa erhalten (Eintrag 4, Tabelle 6), was einer Härtesteigerung von 28 % entspricht, verglichen mit dem Referenzschaum ohne Schaumhärter-Additiv. Mit 5 pphp des Additivs nach Beispiel 2 konnte eine Härtesteigerung von 37 % erreicht werden (4,8 kPa, Porosität 42 mm H₂O, Eintrag 5, Tabelle 6). Beim Einsatz von 3 pphp des nicht erfindungsgemäßen Schaumhärter-Additivs, welches nach Beispiel 3 synthetisiert wurde, zeigte sich zwar auch eine Härtesteigerung verglichen mit dem Referenzschaum (4,5 kPa, 28 % Steigerung, Eintrag 6, Tabelle 6), jedoch wurde eine nicht offenzellige Schaumstruktur erhalten (Porosität > 300 mm Wassersäule). Nach Einsatz von 5 pphp war der erhaltene Schaum sogar so geschlossen, dass nach Abkühlung nur noch ein Schrumpf erhalten wurde. Deshalb war eine Auswertung der anderen physikalischen Daten nicht möglich.

Aus Tabelle 7 geht hervor, dass Schaumstoffe, welche nach Formulierung II (Dichte 16 kg/m³) ohne Schaumhärter-Additiv hergestellt wurden, eine Stauchhärte bei 40 %iger Kompression von 2,5 kPa aufweisen (Referenzschaum, Eintrag 8, Tabelle 7). Mit einer Luftdurchlässigkeit von 23 mm Wassersäule wurde außerdem eine sehr offenzellige Zellstruktur erhalten. Nach Zusatz von 3 pphp des analog Beispiel 1 hergestellten erfindungsgemäßen Additivs wurde ein Schaumstoff erhalten, welcher eine Stauchhärte bei 40 %iger Kompression von 3,1 kPa aufwies (Eintrag 9, Tabelle 7). Dies entspricht einer Härtesteigerung von 24 %. Bei Zusatz von 5 pphp des Additivs nach Beispiel 1 konnte eine Härtesteigerung von 36 % erreicht werden (3,4 kPa, Eintrag 10, Tabelle 7). In beiden Fällen wurden außerdem ebenfalls offenzellige Porenstrukturen erhalten (30 mm H₂O, Eintrag 9 und 74 mm H₂O, Eintrag 10). Beim Einsatz von 3 pphp des Additivs dargestellt nach Beispiel 2 wurde ein offenzelliger Weichblockschaum (35 mm H₂O) mit einer Stauchhärte von 3,1 kPa erhalten (Eintrag 11, Tabelle 7), was einer Härtesteigerung von 24 % entspricht, verglichen mit dem Referenzschaum ohne Schaumhärter-Additiv. Mit 5 pphp des Additivs nach Beispiel 2 konnte eine Härtesteigerung von 40 % erreicht werden (3,5 kPa, Porosität 75 mm H₂O, Eintrag 12, Tabelle 7). Beim Einsatz von 3 pphp bzw. 5 pphp des nicht erfindungsgemäßen Schaumhärter-Additivs, welches nach Beispiel 3 synthetisiert wurde, zeigte sich zwar auch eine Härtesteigerung verglichen mit dem Referenzschaum (3,1 kPa, 24 % Steigerung, Eintrag 13, Tabelle 7 bzw. 3,5 kPa, 40 % Steigerung, Eintrag 14, Tabelle 7), jedoch wurde eine nicht offenzellige Schaumstruktur erhalten (Porosität jeweils > 300 mm Wassersäule).

So konnte gezeigt werden, dass mit dem erfindungsgemäßen Additiv, dargestellt nach Beispiel 1, in den Formulierung I und II eine signifikante Härtesteigerung im Vergleich zum Referenzschaum ohne Schaumhärter-Additiv erzielt werden konnte. In allen Fällen konnten außerdem hinreichend offene Zellstrukturen erhalten werden. Mit dem nicht erfindungsgemäßen Additiv, welches nach Beispiel 3 hergestellt wurde, konnte zwar ebenfalls eine Härtesteigerung im Vergleich zur Referenz erzielt werden, jedoch stellte sich heraus, dass in allen Fällen eine sehr geschlossene Porenstruktur erhalten wurde.

Aus Tabelle 8 wird ersichtlich, dass Schaumstoffe, welche mit dem erfindungsgemäßen Additiv (dargestellt analog dem Beispielen 1) nach Formulierung III hergestellt wurden (Eintrag 16, Tabelle 8), bessere Alterungseigenschaften aufweisen als der Referenzschaum ohne Schaumhärter-Additiv (Eintrag 15, Tabelle 8) oder der Schaumstoff, welcher mit 3 Teilen des nicht erfindungsgemäßen Additivs nach Beispiel 3 produziert wurde (Eintrag 18, Tabelle 8). Um eine gute Vergleichbarkeit zu erzielen, sollten alle getesteten Schäume sowohl eine vergleichbare Stauchhärte als auch eine vergleichbare Luftdurchlässigkeit aufweisen. Um dies zu erreichen wurde die Menge an Zinnkatalysator in den einzelnen Verschäumungen variiert. Der Referenzschaum ohne Schaumhärter-Additiv wurde mit 0,28 pphp KOSMOS^{®} 29 (Zinnkatalysator, erhältlich bei der Firma Evonik Industries AG: Zinn(II)-Salz der 2-Ethylhexansäure) hergestellt (Eindruckhärte (ILD 40 %) 110 N, Luftdurchlässigkeit 49 mm H₂O, Eintrag 15, Tabelle 8), wohingegen die Schäume, welche 3 pphp des erfindungsgemäßen Schaumhärter-Additivs nach Beispiel 1 enthielten, mit einer Menge von 0,22 pphp KOSMOS^{®}29 hergestellt wurden (Eindruckhärte (ILD 40 %) 113 N, Luftdurchlässigkeit 43 mm H₂O, Eintrag 16, Tabelle 8). Der Schaum, welcher mit 3 Teilen des nicht erfindungsgemäßen Additivs nach Beispiel 3 hergestellt wurde, enthielt lediglich 0,18 pphp KOSMOS^{®} 29 (Eindruckhärte (ILD 40 %) 115 N, Luftdurchlässigkeit 48 mm H₂O, Eintrag 18, Tabelle 8).

Anschließend wurden die erhaltenen Schäume zur Untersuchung der Alterungseigenschaften einem Alterungstest in Anlehnung an ISO 3385-1975 unterzogen. Hierzu wurde ein 380 mm x 380 mm x 50 mm großes Schaummuster 80000 mal bei einer Frequenz von 70 Zyklen pro Minute bis auf 70 % seiner Ursprungshöhe zusammengedrückt und wieder entspannt. Anschließend wurde der Verlust der Schaumdicke und der Verlust an Eindruckhärte ermittelt. Die verbesserten Alterungseigenschaften der Schaumstoffe, welche mit den erfindungsgemäßen Additiven hergestellt wurden, zeigte sich insbesondere in dem geringeren Härteverlust nach 80000-facher Kompression. So konnte ein Verlust an Eindruckhärte nach 40 %iger Stauchung von 16,2 % im Falle des erfindungsgemäßen Additivs ermittelt werden (Eintrag 16, Tabelle 8), wohingegen die Referenz einen Verlust an Eindruckhärte von 24,6 % aufwies (Eintrag 15, Tabelle 8). Der Schaumstoff, der mit 3 Teilen des nach Beispiel 3 synthetisierten nicht erfindungsgemäßen Additivs erhalten wurde, wies nach 80000 Stauchungen auf 40% der Ursprungshöhe einen Verlust an Eindruckhärte von 25,6 % auf (Eintrag 18, Tabelle 8).

Tabelle 9 zeigt, dass auch mit Kohlenstoffdioxid als physikalischem Treibmittel (Formulierung IV, Dichte 18 kg/m³) durch Einsatz des erfindungsgemäßen Additivs eine signifikante Härtesteigerung erzielt werden kann, wobei die Luftdurchlässigkeit der erhaltenen Schaumstoffe nur marginal beeinträchtigt wird. Schaumstoffe, die ohne Schaumhärter-Additiv hergestellt wurden, wiesen eine Stauchhärte bei 40 %iger Kompression von 2,0 kPa auf (Referenzschaum, Eintrag 19, Tabelle 9). Mit einer Luftdurchlässigkeit von 11 mm Wassersäule wurde außerdem eine sehr offenzellige Zellstruktur erhalten. Nach Zusatz von 3 pphp des analog Beispiel 1 hergestellten erfindungsgemäßen Additivs wurde ein Schaumstoff erhalten, welcher eine Stauchhärte bei 40 %iger Kompression von 2,4 kPa aufwies (Eintrag 20, Tabelle 9). Dies entspricht einer Härtesteigerung von 20 %. Bei Zusatz von 5 pphp des Additivs nach Beispiel 1 konnte eine Härtesteigerung von 30 % erreicht werden (2,6 kPa, Eintrag 21, Tabelle 9). In beiden Fällen wurden außerdem ebenfalls offenzellige Porenstrukturen erhalten (23 mm H₂O, Eintrag 20 und 45 mm H₂O, Eintrag 21). Beim Einsatz von 3 pphp des Additivs dargestellt nach Beispiel 2 wurde ein offenzelliger Weichblockschaum (30 mm H₂O) mit einer Stauchhärte von 2,5 kPa erhalten (Eintrag 22, Tabelle 9), was einer Härtesteigerung von 25 % entspricht, verglichen mit dem Referenzschaum ohne Schaumhärter-Additiv. Mit 5 pphp des Additivs nach Beispiel 2 konnte eine Härtesteigerung von 30 % erreicht werden (2,6 kPa, Porosität 49 mm H₂O, Eintrag 23, Tabelle 9). Beim Einsatz von 3 pphp bzw. 5 pphp des nicht erfindungsgemäßen Schaumhärter-Additivs, welches nach Beispiel 3 synthetisiert wurde, zeigte sich zwar auch eine Härtesteigerung verglichen mit dem Referenzschaum (2,4 kPa, 20 % Steigerung, Eintrag 24, Tabelle 9 bzw. 2,6 kPa, 30 % Steigerung, Eintrag 25, Tabelle 9), jedoch wurde eine nicht offenzellige Schaumstruktur erhalten (Porosität jeweils > 300 mm Wassersäule).

**Tabelle 8: Verschäumungsergebnisse nach bei Verwendung verschiedener Schaumhärter-Additive nach Formulierung III und Ergebnisse der Untersuchung der Alterungseigenschaften in Anlehnung an ISO 3385-1975 (E).**

| Nr. | Additiv | Einsatzmenge [pphp] | | | Eindruckhärte (ILD 40 %, 24 h) [N] | Porosität [mm] | Verlust an Eindruckhärte [%] | Verlust an Schaumdicke [%] |
|---|---|---|---|---|---|---|---|---|
| | | Additiv | Polyol | KOSMOS^{®} 29 | | | | |
| 15 | Referenz | 0 | 100 | 0,28 | 110 | 49 | 24,6 | 2,0 |
| 16 | Bsp. 1 ^{a)} | 3 | 97 | 0,22 | 113 | 43 | 16,2 | 2,0 |
| 17 | Bsp. 2 ^{a1)} | 3 | 97 | 0,22 | 113 | 44 | 15,8 | 1,8 |
| 18 | Bsp. 3 ^{b)} | 3 | 97 | 0,18 | 115 | 48 | 25,9 | 2,4 |

| | | | | | | | | |
|---|---|---|---|---|---|---|---|---|
| ^{a)} erfindungsgemäßes Additiv, dargestellt nach Beispiel 1 ^{a1)} Additiv, dargestellt nach Beispiel 2 ^{b)} nicht erfindungsgemäßes Additiv, dargestellt nach Beispiel 3 | | | | | | | | |

**Tabelle 9: Verschäumungsergebnisse bei Verwendung verschiedener Schaumhärter-Additive nach Formulierung IV**

| Nr. | Additiv | Einsatzmenge [pphp] | | Steigzeit [s] | Rückfall [cm] | Zellzahl [cm⁻¹] | Dichte [kg/m³] | Stauchhärte (CLD 40 %) [kPa] | Steigerung Stauchhärte [%] | Porosität [mm] |
|---|---|---|---|---|---|---|---|---|---|---|
| | | Additiv | Polyol | | | | | | | |
| 19 | Referenz | 0 | 100 | 100 | 0,2 | 11 | 17,5 | 2,0 | - | 11 |
| 20 | Bsp. 1 ^{a)} | 3 | 100 | 99 | 0,3 | 11 | 17,7 | 2,4 | 20 | 23 |
| 21 | Bsp. 1 ^{a)} | 5 | 100 | 100 | 0,3 | 11 | 17,8 | 2,6 | 30 | 45 |
| 22 | Bsp. 2 ^{a1)} | 3 | 100 | 102 | 0,2 | 11 | 17,8 | 2,5 | 25 | 30 |
| 23 | Bsp. 2 ^{a1)} | 5 | 100 | 101 | 0,2 | 11 | 17,7 | 2,6 | 30 | 49 |
| 24 | Bsp. 3 ^{b)} | 3 | 100 | 122 | 0,1 | 11 | 17,5 | 2,4 | 20 | >300 |
| 25 | Bsp. 3 ^{b)} | 5 | 100 | 128 | 0,0 | 11 | 17,3 | 2,6 | 30 | >300 |

| | | | | | | | | | | |
|---|---|---|---|---|---|---|---|---|---|---|
| ^{a)} erfindungsgemäßes Additiv, dargestellt nach Beispiel 1 ^{a1)} Additiv, dargestellt nach Beispiel 2 ^{b)} nicht erfindungsgemäßes Additiv, dargestellt nach Beispiel 3 | | | | | | | | | | |

## Patentansprüche

1. Additiv, geeignet zur Steigerung der Härte bei der Herstellung von Polyurethanweichschaum, welches mindestens eine Verbindung (V) enthält,
(i) die mindestens drei gegenüber Isocyanaten reaktive Wasserstoffatome enthält,
(ii) eine durchschnittliche Hydroxylzahl, bestimmt nach DIN 53240-1:2013-06, von 80 - 280 mg KOH/g, bevorzugt von 100 - 250 mg KOH/g, aufweist und
(iii) > 50 Gew.-% im Molekül gebundenes Ethylenoxid enthält, Gew.-% bezogen auf den Gesamtalkylenoxidgehalt der Verbindung (V),
wobei die erfindungsgemäße Verbindung (V) mindestens 50% primäre OH-Gruppen aufweist und ausgewählt ist aus Verbindungen der Formel (I) 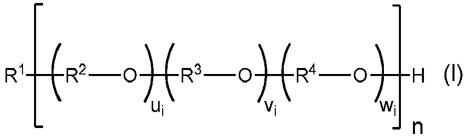 worin
R¹ = Startersubstanzrest ohne für die Alkoxylierung aktiven H-Atome, wie vorzugsweise Molekülreste von mehrwertigen Alkoholen, mehrwertigen Aminen, mehrwertigen Thiolen, Carbonsäuren, Aminoalkoholen, Aminocarbonsäuren, Thioalkoholen, Hydroxyestern, Polyetherpolyolen, Polyesterpolyolen, Polyesteretherpolyolen, Polycarbonatpolyolen, Polyethyleniminen, Polyetheraminen, Polyetherthiolen, Polyacrylatpolyolen, Ricinusöl, von Mono-, Di oder Triglyceriden der Ricinolsäure, chemisch modifizierten Mono-, Di- und/oder Triglyceriden von Fettsäuren und/oder C1-C24 Alkyl-Fettsäureestern, die im Mittel mindestens 3 OH-Gruppen pro Molekül enthalten,
R² CH₂-CH(CH₃),
R³ CH₂-CH₂,
R⁴ CH₂-CH(R⁵), CH(R⁶)-CH(R⁶), CH₂-C(R⁶)₂, C(R⁶)₂-C(R⁶)₂, 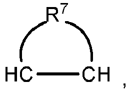 CH₂-CH-CH₂-R⁸, C₆H₆-CH-CH₂, C₆H₆-C(CH₃)-CH₂, Molekülrest von ein- oder mehrfach epoxidierten Fetten oder Ölen als Mono-, Di-, und Triglyceride oder Molekülrest von ein- oder mehrfach epoxidierten Fettsäuren oder deren C₁-C₂₄-Alkylestern ,
R⁵ C₂ bis C₂₄-Alkylrest, Alkenrest, der linear oder verzweigt sein kann,
R⁶ C₂ bis C₂₄-Alkylrest, Alkenrest, der linear oder verzweigt sein kann,
R⁷ C₃ bis C₆ Alkylrest, der linear angeordnet ist,
R⁸ OH, Cl, OCH₃, OCH₂-CH₃, O-CH₂-CH=CH₂, O-CH=CH₂
und wobei gilt
uᵢ ≥ 1,
vᵢ ≥ 1,
wᵢ ganze Zahlen von 0 - 400; insbesondere wᵢ = 0
n ganze Zahl von 3 bis 25, bevorzugt von 3 bis 10, insbesondere 3 bis 8.
i ganze Zahl mit i = 1 bis n,
wobei
die Reihenfolge der Monomerbausteine in den einzelnen Polymerketten 1 bis n beliebig ist, und wobei die n-Polymerketten voneinander unabhängig zusammengesetzt sein können,
wobei
das im Molekül gebundene Ethylenoxid zumindest zu 90% endständig ist, % bezogen auf das gesamte im Molekül gebundene Ethylenoxid,
und wobei
die enthaltenen Verbindungen (V) 55 bis 99 Gew.-%, Ethylenoxid und 1 bis 45 Gew.-% Propylenoxid, enthalten, Gew.-% bezogen auf den Gesamtalkylenoxidgehalt der Verbindung (V) gemäß Formel (I).

2. Additiv nach Anspruch 1, **dadurch gekennzeichnet, dass** die Verbindung (V) eine Funktionalität von 3 - 10, bevorzugt 3-8 aufweist.

3. Additiv nach Anspruch 1 oder 2, **dadurch gekennzeichnet, dass** das im Molekül gebundene Ethylenoxid zu 100%, bevorzugt in Form von Blöcken, endständig ist, % bezogen auf das gesamte im Molekül gebundene Ethylenoxid.

4. Additiv nach zumindest einem der Ansprüche 1 bis 3, **dadurch gekennzeichnet, dass** es sich bei Raumtemperatur und Atmosphärendruck um eine Flüssigkeit handelt.

5. Additiv nach zumindest einem der Ansprüche 1 bis 4, **dadurch gekennzeichnet, dass** die enthaltenen Verbindungen (V) 60 bis 85 Gew.-% Ethylenoxid und 15 bis 40 Gew.-% Propylenoxid, enthalten, Gew.-% bezogen auf den Gesamtalkylenoxidgehalt der Verbindung (V) gemäß Formel (I).

6. Verfahren zur Herstellung von Polyurethanschäumen, vorzugsweise PU-Weichschäumen, durch Umsetzung
(a) einer oder mehrerer Polyolkomponenten mit
(b) einer oder mehrerer Isocyanatkomponenten,
in Gegenwart
(c) eines Additivs,
(d) von Katalysatoren,
(e) von Wasser und gegebenenfalls organischen Treibmitteln, vorzugsweise Kohlenstoffdioxid und/oder Methylenchlorid
(g) von Stabilisatoren und gegebenenfalls Emulgatoren und
(f) gegebenenfalls von sonstigen Zusatzstoffen,
**dadurch gekennzeichnet, dass** als Additiv eine Additivzusammensetzung gemäß einem der Ansprüche 1 bis 5, welches mindestens eine Verbindung (V) enthält, eingesetzt wird.

7. Verfahren nach Anspruch 6, **dadurch gekennzeichnet, dass** 0,1 bis 10 Gew.-Teile, insbesondere 0,5 bis 8 Gew.-Teile an Verbindungen (V) pro 100 Teilen des insgesamt eingesetzten Polyol eingesetzt werden.

8. Verfahren nach einem der Ansprüche 6 oder 7 zur Herstellung von Polyurethanweichschaumstoffen, aufweisend
- eine Gasdurchlässigkeit (A) von 1 bis 300 mm Wassersäule, bevorzugt 3 bis 250 mm Wassersäule,
- eine Dichte (B) vorzugsweise von 5 bis 150 kg/m³, bevorzugt von 10 bis 130 kg/m³ und besonders bevorzugt von 15 bis 100 kg/m³,
- eine Porenstruktur (C) vorzugsweise mit 5 bis 25 Zellen/cm,
- eine Druckspannung (D) von 0,1 kPa bis 15 kPa, bevorzugt 0,5 bis 13 kPa, insbesondere bevorzugt 2 bis 11 kPa sowie
- vorzugsweise eine zu mehr als 80 % offenzellige Zellstruktur (E),
(A) bis (E) gemessen wie jeweils in der Beschreibung angegeben.

9. Verfahren nach zumindest einem der Ansprüche 6 bis 8, **dadurch gekennzeichnet, dass** als Isocyanat Toluol-2,4-diisocyanat als Isomerengemisch eingesetzt wird, insbesondere als Gemisch aus 80 % Toluol-2,4-diisocyanat und 20 % Toluol-2,6-diisocyanat.

10. Polyurethanschaum, erhältlich nach einem Verfahren der Ansprüche 6 bis 9, wobei es sich vorzugsweise um einen Polyurethanweichschaum, einen Polyurethanformschaum oder einen frei gestiegenen Polyurethan-Weichblockschaum handelt.

11. Polyurethanschaum, nach Anspruch 10, aufweisend
- eine Gasdurchlässigkeit (A) von 1 bis 300 mm Wassersäule, bevorzugt 3 bis 250 mm Wassersäule,
- eine Dichte (B) vorzugsweise von 5 bis 150 kg/m³, bevorzugt von 10 bis 130 kg/m³ und besonders bevorzugt von 15 bis 100 kg/m³,
- eine Porenstruktur (C) vorzugsweise mit 5 bis 25 Zellen/cm,
- eine Druckspannung (D) von 0,1 kPa bis 15 kPa, bevorzugt 0,5 bis 13 kPa, insbesondere bevorzugt 2 bis 11 kPa sowie
- vorzugsweise eine zu mehr als 80 % offenzellige Zellstruktur (E),
(A) bis (E) gemessen wie jeweils in der Beschreibung angegeben.

12. Verwendung des Polyurethanschaums nach einem der Ansprüche 10 oder 11 als Verpackungsschaum, Matratze, Möbelpolster, Werkstoff in Kraftfahrzeuginnenräumen, Automobil-Sitzpolster, Kopfstütze, Automobil-Innenverkleidung, Schallabsorptionsmaterial, Schuhsole, Schaumstoff für Büstenhalter, Teppichrückseitenschaum, Filterschaum, oder zur Herstellung entsprechender Produkte, insbesondere als Werkstoff in Kraftfahrzeuginnenräumen.

13. Verwendung eines Additivs gemäß einem der Ansprüche 1 bis 5 zur Verbesserung der Härte von Polyurethanweichschaum unter Erhalt einer hinreichenden Offenzelligkeit, insbesondere unter Vermeidung einer Reduktion des TDI-Indexes oder der Katalysatormengen, und/oder zur Verbesserung der Alterungseigenschaften von Polyurethanweichschaum jeweils im Zuge der Schaumherstellung.

14. Aktivatorlösung, geeignet zur Herstellung von Polyurethanweichschaum, umfassend Additiv gemäß einem der Ansprüche 1 bis 5 sowie Stabilisatoren, Katalysatoren, Treibmittel, wie insbesondere Wasser, sowie optional weitere Additive, wie insbesondere Flammschutzmittel, Antioxidantien, UV-Stabilisatoren, Farbstoffe, Biozide, Pigmente, Zellöffner und/oder Vernetzer, wobei die Aktivatorlösung frei ist von Isocyanaten und Polyolen ungleich der Verbindung (V).

## Claims

1. Additive suitable for increasing hardness in the production of flexible polyurethane foam, comprising at least one compound (V)
(i) containing at least three hydrogen atoms reactive toward isocyanates,
(ii) having an average hydroxyl number, determined to DIN 53240-1:2013-06, of 80-280 mg KOH/g, preferably of 100-250 mg KOH/g, and
(iii) containing > 50 wt% of ethylene oxide bound within the molecule, wt% based on the total alkylene oxide content of the compound (V),
wherein the inventive compound (V) has at least 50% primary OH groups and is selected from compounds of the formula (I) 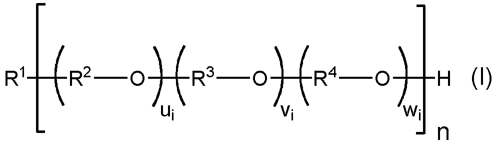 in which
R¹ = starter substance radical minus the hydrogen atoms active for the alkoxylation, such as preferably molecular residues of polyhydric alcohols, polyfunctional amines, polyhydric thiols, carboxylic acids, amino alcohols, aminocarboxylic acids, thio alcohols, hydroxyl esters, polyether polyols, polyester polyols, polyester ether polyols, polycarbonate polyols, polyethyleneimines, polyether amines, polyether thiols, polyacrylate polyols, castor oil, of mono-, di- or triglycerides of ricinoleic acid, chemically modified mono-, di- and/or triglycerides of fatty acids and/or C1-C24 alkyl fatty acid esters containing an average of at least 3 OH groups per molecule,
R² is CH₂-CH(CH₃),
R³ is CH₂-CH₂,
R⁴ is CH₂-CH(R⁵), CH(R⁶)-CH(R⁶), CH₂-C(R⁶)₂, C(R⁶)₂-C(R⁶)₂, 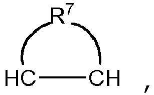 CH₂-CH-CH₂-R⁸, C₆H₆-CH-CH₂, C₆H₆-C(CH₃)-CH₂, molecular residue of mono- or polyepoxidized fats or oils as mono-, di- and triglycerides or molecular residue of mono- or polyepoxidized fatty acids or the C₁-C₂₄-alkyl esters thereof,
R⁵ is a C₂ to C₂₄ alkyl radical or alkene radical, which may be linear or branched,
R⁶ is a C₂ to C₂₄ alkyl radical or alkene radical, which may be linear or branched,
R⁷ is a C₃ to C₆ alkyl radical in linear arrangement,
R⁸ is OH, Cl, OCH₃, OCH₂-CH₃, O-CH₂-CH=CH₂, O-CH=CH₂,
and where
uᵢ ≥ 1,
vᵢ ≥ 1,
wᵢ is integers of 0-400, especially wᵢ = 0
n is an integer of 3 to 25, preferably of 3 to 10, especially 3 to 8,
i is an integer with i = 1 to n,
where
the sequence of the monomer units in the individual polymer chains 1 to n is arbitrary, and where the compositions of the n-polymer chains may be independent of one another,
where
the ethylene oxide bound within the molecule is in a terminal position at least to an extent of 90%, % based on the total amount of ethylene oxide bound within the molecule,
and where
the compounds (V) present contain 55 to 99 wt% of ethylene oxide and 1 to 45 wt% of propylene oxide, wt% based on the total alkylene oxide content of the compound (V) as per formula (I).

2. Additive according to Claim 1, **characterized in that** the compound (V) has a functionality of 3-10 and preferably 3-8.

3. Additive according to Claim 1 or 2, **characterized in that** the ethylene oxide bound within the molecule is in a terminal position, preferably in the form of blocks, to an extent of 100%, % based on the total amount of ethylene oxide bound within the molecule.

4. Additive according to at least one of Claims 1 to 3, **characterized in that** it is a liquid at room temperature and atmospheric pressure.

5. Additive according to at least one of Claims 1 to 4, **characterized in that** the compounds (V) present contain 60 to 85 wt% of ethylene oxide and 15 to 40 wt% of propylene oxide, wt% based on the total alkylene oxide content of the compound (V) as per formula (I).

6. Process for producing polyurethane foams, preferably flexible polyurethane foams, by reacting
(a) one or more polyol components with
(b) one or more isocyanate components,
in the presence of
(c) an additive,
(d) catalysts,
(e) water and optionally organic blowing agents, preferably carbon dioxide and/or methylene chloride,
(g) stabilizers and optionally emulsifiers and
(f) optionally other additives,
**characterized in that** the additive used is an additive composition according to any of Claims 1 to 5, comprising at least one compound (V).

7. Process according to Claim 6, **characterized in that** 0.1 to 10 parts by weight, especially 0.5 to 8 parts by weight, of compounds (V) are used per 100 parts of the total amount of polyol used.

8. Process according to either of Claims 6 and 7 for production of flexible polyurethane foams having
- a gas permeability (A) of 1 to 300 mm water column and preferably 3 to 250 mm water column,
- a density (B) preferably of 5 to 150 kg/m³, more preferably of 10 to 130 kg/m³ and especially preferably of 15 to 100 kg/m³,
- a pore structure (C) preferably having 5 to 25 cells/cm,
- a compressive strength (D) of 0.1 kPa to 15 kPa, preferably 0.5 to 13 kPa and especially preferably 2 to 11 kPa, and
- preferably a cell structure (E) having an open-cell content of more than 80%,
(A) to (E) each measured as specified in the description.

9. Process according to at least one of Claims 6 to 8, **characterized in that** the isocyanate used is toluene 2,4-diisocyanate as an isomer mixture, especially as a mixture of 80% toluene 2,4-diisocyanate and 20% toluene 2,6-diisocyanate.

10. Polyurethane foam obtainable by a process of Claims 6 to 9, wherein the polyurethane foam is preferably a flexible polyurethane foam, a moulded polyurethane foam or a free-rise flexible slabstock polyurethane foam.

11. Polyurethane foam according to Claim 10, having
- a gas permeability (A) of 1 to 300 mm water column and preferably 3 to 250 mm water column,
- a density (B) preferably of 5 to 150 kg/m³, more preferably of 10 to 130 kg/m³ and especially preferably of 15 to 100 kg/m³,
- a pore structure (C) preferably having 5 to 25 cells/cm,
- a compressive strength (D) of 0.1 kPa to 15 kPa, preferably 0.5 to 13 kPa and especially preferably 2 to 11 kPa, and
- preferably a cell structure (E) having an open-cell content of more than 80%,
(A) to (E) each measured as specified in the description.

12. Use of the polyurethane foam according to either of Claims 10 and 11 as packaging foam, mattress, furniture cushioning, material in motor vehicle interiors, automobile seat cushioning, headrest, automobile interior trim, sound absorption material, shoe sole, foam for brassieres, carpet backing foam, filter foam, or for production of corresponding products, especially as material in motor vehicle interiors.

13. Use of an additive according to any of Claims 1 to 5 for improving the hardness of flexible polyurethane foam with retention of an adequate open-cell content, especially with avoidance of a reduction in the TDI index or in the amounts of catalyst, and/or for improving the ageing properties of flexible polyurethane foam in the course of foam production in each case.

14. Activator solution suitable for production of flexible polyurethane foam, comprising additive according to any of Claims 1 to 5, and stabilizers, catalysts, blowing agents, such as particularly water, and optionally further additives, such as particularly flame retardants, antioxidants, UV stabilizers, dyes, biocides, pigments, cell openers and/or crosslinkers, wherein the activator solution is free of isocyanates and polyols other than the compound (V).

## Revendications

1. Additif, approprié pour l'augmentation de la dureté lors de la préparation de mousse souple de polyuréthane, qui contient au moins un composé (V)
(i) qui contient au moins trois atomes d'hydrogène réactifs envers des isocyanates,
(ii) qui présente un indice d'hydroxyle moyen, déterminé selon la norme DIN 53240-1:2013-06, de 80 à 280 mg de KOH/g, préférablement de 100 à 250 mg de KOH/g, et
(iii) qui contient > 50 % en poids d'oxyde d'éthylène lié dans la molécule, le % en poids se rapportant à la teneur totale en oxyde d'alkylène du composé (V),
le composé (V) selon l'invention présentant au moins 50 % de groupes OH primaires et étant choisi parmi des composés de formule (I) 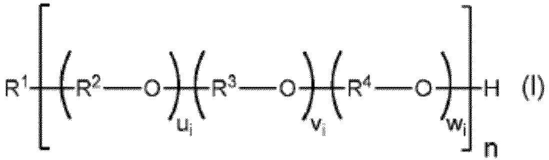 dans laquelle
R¹ = radical de substance de départ sans atomes de H actifs pour l'alcoxylation, comme de préférence des radicaux moléculaires d'alcools polyvalents, d'amines polyvalentes, de thiols polyvalents, d'acides carboxyliques, d'aminoalcools, d'acides aminocarboxyliques, de thioalcools, d'hydroxyesters, de polyétherpolyols, de polyesterpolyols, de polyesterétherpolyols, de polycarbonatepolyols, de polyéthylèneimines, de polyétheramines, de polyétherthiols, de polyacrylatepolyols, d'huile de ricin, de monoglycérides, de diglycérides ou de triglycérides de l'acide ricinoléique, de monoglycérides, de diglycérides et/ou de triglycérides chimiquement modifiés d'acides gras et/ou d'esters d'acides gras d'alkyle en C1-24, qui contiennent en moyenne au moins 3 groupes OH par molécule,
R² CH₂-CH(CH₃),
R³ CH₂-CH₂,
R⁴ CH₂-CH(R⁵), CH(R⁶)-CH(R⁶), CH₂-C(R⁶)₂, C(R⁶)₂-C(R⁶)₂, 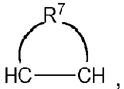 CH₂-CH-CH₂-R⁸, C₆H₆-CH-CH₂, C₆H₆-C(CH₃)-CH₂, radical moléculaire de graisses ou d'huiles époxydées une fois ou plusieurs fois en tant que monoglycérides, diglycérides et triglycérides ou radical moléculaire d'acides gras époxydés une fois ou plusieurs fois ou leurs esters d'alkyle en C₁₋₂₄,
R⁵ radical alkyle en C₂₋₂₄, radical alcène, qui peut être linéaire ou ramifié,
R⁶ radical alkyle en C₂₋₂₄, radical alcène, qui peut être linéaire ou ramifié,
R⁷ radical alkyle en C₃₋₆, qui est agencé de manière linéaire,
R⁸ OH, Cl, OCH₃, OCH₂-CH₃, O-CH₂-CH=CH₂, O-CH=CH₂
et
uᵢ ≥ 1,
vᵢ ≥ 1,
wᵢ nombres entiers de 0 à 400 ; en particulier wᵢ = 0
n nombre entier de 3 à 25, préférablement de 3 à 10, en particulier de 3 à 8,
i nombre entier avec i = 1 à n,
l'ordre des blocs de monomère dans les chaînes polymériques individuelles 1 à n étant arbitraire, et les n chaînes de polymère pouvant être composées indépendamment les unes des autres,
l'oxyde d'éthylène lié dans la molécule étant terminal à hauteur d'au moins 90 %, le % se rapportant à tout l'oxyde d'éthylène lié dans la molécule,
et
les composés (V) contenus contenant 55 à 99 % en poids, d'oxyde d'éthylène et 1 à 45 % en poids d'oxyde de propylène, les % en poids étant par rapport à la teneur totale en oxyde d'alkylène du composé (V) selon la formule (I).

2. Additif selon la revendication 1, **caractérisé en ce que** le composé (V) présente une fonctionnalité de 3 à 10, préférablement de 3 à 8.

3. Additif selon la revendication 1 ou 2, **caractérisé en ce que** l'oxyde d'éthylène lié dans la molécule est à 100 % terminal, préférablement sous la forme de blocs, le % se rapportant à tout l'oxyde d'éthylène lié dans la molécule.

4. Additif selon au moins l'une des revendications 1 à 3, **caractérisé en ce que** c'est un liquide à température ambiante et à pression atmosphérique.

5. Additif selon au moins l'une des revendications 1 à 4, **caractérisé en ce que** les composés (V) contenus contiennent 60 à 85 % en poids d'oxyde d'éthylène et 15 à 40 % en poids d'oxyde de propylène, les % en poids étant par rapport à la teneur totale en oxyde d'alkylène du composé (V) selon la formule (I) .

6. Procédé pour la préparation de mousses de polyuréthane, de préférence de mousses souples de PU, par transformation
(a) d'un ou plusieurs composants de type polyol avec
(b) un ou plusieurs composants de type isocyanate, en présence
(c) d'un additif,
(d) de catalyseurs,
(e) d'eau et éventuellement d'agents gonflants organiques, de préférence le dioxyde de carbone et/ou le chlorure de méthylène
(g) de stabilisants et éventuellement d'émulsifiants et
(f) éventuellement d'autres adjuvants, **caractérisé en ce qu'**une composition d'additif selon l'une quelconque des revendications 1 à 5, qui contient au moins un composé (V), est utilisée en tant qu'additif.

7. Procédé selon la revendication 6, **caractérisé en ce que** 0,1 à 10 parties en poids, en particulier 0,5 à 8 parties en poids de composés (V) sont utilisées par 100 parties du polyol utilisé au total.

8. Procédé selon l'une quelconque des revendications 6 et 7 pour la préparation de mousses souples de polyuréthane, présentant
- une perméabilité (A) aux gaz de 1 à 300 mm de colonne d'eau, préférablement de 3 à 250 mm de colonne d'eau,
- une densité (B) de préférence de 5 à 150 kg/m³, préférablement de 10 à 130 kg/m³ et particulièrement préférablement de 15 à 100 kg/m³,
- une structure (C) de pores comportant de préférence 5 à 25 alvéoles/cm,
- une contrainte de compression (D) de 0,1 kPa à 15 kPa, préférablement de 0,5 à 13 kPa, en particulier préférablement de 2 à 11 kPa ainsi que
- de préférence une structure alvéolaire (E) comprenant plus de 80 % d'alvéoles ouvertes,
(A) à (E) étant mesurées comme indiqué à chaque fois dans la description.

9. Procédé selon au moins l'une des revendications 6 à 8, **caractérisé en ce que** le 2,4-diisocyanate de toluène en tant que mélange d'isomères est utilisé en tant qu'isocyanate, en particulier en tant que mélange de 80 % de 2,4-diisocyanate de toluène et de 20 % de 2,6-diisocyanate de toluène.

10. Mousse de polyuréthane pouvant être obtenue par un procédé des revendications 6 à 9, qui est de préférence une mousse souple de polyuréthane, une mousse moulée de polyuréthane ou une mousse à bloc souple de polyuréthane librement montée.

11. Mousse de polyuréthane selon la revendication 10, présentant
- une perméabilité (A) aux gaz de 1 à 300 mm de colonne d'eau, préférablement de 3 à 250 mm de colonne d'eau,
- une densité (B) de préférence de 5 à 150 kg/m³, préférablement de 10 à 130 kg/m³ et particulièrement préférablement de 15 à 100 kg/m³,
- une structure (C) de pores comportant de préférence 5 à 25 alvéoles/cm,
- une contrainte de compression (D) de 0,1 kPa à 15 kPa, préférablement de 0,5 à 13 kPa, en particulier préférablement de 2 à 11 kPa ainsi que
- de préférence une structure alvéolaire (E) comprenant plus de 80 % d'alvéoles ouvertes,
(A) à (E) étant mesurées comme indiqué à chaque fois dans la description.

12. Utilisation de la mousse de polyuréthane selon l'une quelconque des revendications 10 et 11 en tant que mousse d'emballage, matelas, rembourrage de meubles, matériau dans des habitacles de véhicules à moteur, rembourrage de siège automobile, appuis-tête, habillage intérieur d'automobile, matériau d'absorption acoustique, semelle de chaussure, mousse pour soutien-gorge, mousse de face arrière de tapis, mousse de filtre ou pour la préparation de produits correspondants, en particulier en tant que matériau dans des habitacles de véhicules à moteur.

13. Utilisation d'un additif selon l'une quelconque des revendications 1 à 5 pour l'amélioration de la dureté de mousse souple de polyuréthane avec obtention d'un état ouvert des alvéoles suffisant, en particulier en empêchant une réduction de l'indice TDI ou des quantités de catalyseur, et/ou pour l'amélioration des propriétés de vieillissement de mousse souple de polyuréthane à chaque fois dans le cadre de la préparation de mousse.

14. Solution d'activateur, appropriée pour la préparation de mousse souple de polyuréthane, comprenant un additif selon l'une quelconque des revendications 1 à 5 ainsi que des stabilisants, des catalyseurs, des agents gonflants, comme en particulier l'eau, ainsi qu'éventuellement d'autres additifs, comme en particulier des agents ignifugeants, des antioxydants, des stabilisants UV, des colorants, des biocides, des pigments, des agents d'ouverture des alvéoles et/ou des agents de réticulation, la solution d'activateur étant exempte d'isocyanates et de polyols au contraire du composé (V).
